# EUROPEAN PATENT APPLICATION

(11) **EP 4 697 801 A1**
(43) Date of publication of application: **18.02.2026**
(21) Application number: 24788018.0
(22) Date of filing: 08.04.2024
(51) Int. Cl.: H04W 36/00

(54) **METHOD AND APPARATUS IN NODE FOR WIRELESS COMMUNICATION**

(30) Priority: 11.04.2023 CN 202310387501
(71) Applicant: Apogee Networks, LLC, Dallas, TX 75201 (US)
(72) Inventor: JIANG, Qi, Shanghai 201206 (CN); WANG, Ping, Shanghai 201206 (CN); ZHANG, Xiaobo, Shanghai 201206 (CN)
(74) Representative: Gunzelmann, Rainer
(86) International application number: PCT/CN2024/086529
(87) International publication number: WO 2024/212915

(57) **Abstract**

The present application discloses a method and apparatus in a node for wireless communication. The method comprises: a first node receiving first signaling, the first signaling being RRC signaling, and the first signaling being used for configuring uplink grant for a first cell; in response to an expiration of a first timer, clearing the uplink grant at least for the first cell; receiving second signaling, the second signaling being MAC layer signaling or physical layer signaling; and in response to receiving the second signaling, handing over to the first cell, wherein the behavior of handing over to the first cell comprises activating the uplink grant configured by the first signaling. According to the present application, the uplink resources can be quickly obtained in a cell handover scenario triggered by protocol layers lower than the RRC layer, the interruption time is shortened, and the signaling overhead is reduced.

## Description

### Technical Field

The present application relates to transmission methods and apparatuses in wireless communication systems, in particular to a method and apparatus for wireless signal transmission.

### Background Art

In the future, the application scenarios of wireless communication systems will become more and more diversified, and different application scenarios will put different performance requirements on the system. In order to meet the different performance needs of various application scenarios, it was decided to study a new radio (NR) technology (or 5G) at the 3rd generation partner project (3GPP) radio access network (RAN) #72 plenary meeting, and a work item (WI) for the new radio (NR) technology was adopted at the 3GPP RAN #75 plenary meeting to begin standardization work on NR.

Mobility of user equipment (UE) is an important feature of wireless networks. Changes in existing serving cells are usually triggered by Layer 3 (L3) measurements and are implemented through a reconfiguration with synchronization triggered by radio resource control (RRC) signaling, which also involves Layer 2 (L2) and Layer 1 (L1) reset. The changes in serving cells implemented by L3 have the characteristics of long delay, large signaling overhead and long interruption time. In order to further enhance the mobility performance of UE, the 3GPP RAN #94e meeting decided to carry out a WI of "Further NR mobility enhancements". L1/L2 triggered mobility (LTM) is an important research direction for reducing latency, overheads, and interruption time.

### Summary of the Invention

In existing standards, when *timeAlignmentTimer* expires, uplink grant for a cell in a corresponding cell group is cleared. The uplink grant is only executed after the terminal receives air interface signaling for activating or reconfiguring the uplink grant. In a management scenario based on L1/L2 triggered mobility, an RRC signaling-triggered reconfiguration with synchronization is not needed. Therefore, how to quickly obtain an uplink resource, reduce a latency, and shorten an interruption time during handing over to a target cell requires further research.

In response to the above-mentioned problems, the present application discloses a solution. It should be noted that, although the present application is primarily intended for an LTM scenario, it is also applicable to other non-LTM scenarios. Further, adopting a unified design solution for different scenarios (such as other non-LTM scenarios, comprising but not limited to a capacity enhancement system, a near field communication system, unlicensed band communication, Internet of Things (IoT), an ultra-reliable low-latency communication (URLLC) network, and vehicle-to-everything) also helps to reduce hardware complexity and cost. In the case of no conflict, embodiments and features in the embodiments in any node of the present application can be applied to any other node. In the absence of conflicts, the embodiments and features in the embodiments of the present application may be arbitrarily combined with each other.

In particular, the explanation of terminology, nouns, functions, and variables in the present application (if not specified) can refer to the definitions in the TS36 series, TS38 series, and TS37 series of the specification protocol of 3GPP. If necessary, 3GPP standards TS38.211, TS38.212, TS38.213, TS38.214, TS38.215, TS38.321, TS38.331, TS38.305, TS38.304, and TS37.355 can be referred to for assisting in understanding the present application.

As one embodiment, the explanation of the terminology in the present application refers to the definitions in the TS36 series of the specification protocol of 3GPP.

As one embodiment, the explanation of the terminology in the present application refers to the definitions in the TS38 series of the specification protocol of 3GPP.

As one embodiment, the explanation of the terminology in the present application refers to the definitions in the TS37 series of the specification protocol of 3GPP.

As one embodiment, the explanation of the terminology in the present application refers to the definitions in the specification protocol of IEEE (Institute of Electrical and Electronics Engineers).

The present application discloses a method for use in a first node for wireless communication, comprising:
receiving first signaling, the first signaling being RRC signaling, and the first signaling being used for configuring uplink grant for a first cell;
in response to an expiration of a first timer, clearing the uplink grant at least for the first cell; and
receiving second signaling, the second signaling being MAC layer signaling or physical layer signaling; and
in response to receiving the second signaling, handing over to the first cell,
wherein a behavior of handing over to the first cell comprises activating the uplink grant configured by the first signaling.

As one embodiment, problems to be solved in the present application comprise: how to activate an uplink grant configured in a target cell during a cell handover process triggered by a protocol layer below an RRC layer.

As one embodiment, problems to be solved in the present application comprise: how to shorten an interruption time during a serving cell change process and reduce an uplink transmission latency.

As one embodiment, the characteristics of the above method comprise: during the cell handover process triggered by the protocol layer lower than the RRC layer, while the first node in the present application hands over to the target cell, configured uplink grant cleared due to an expiration of *timeAlignmentTimer* is automatically activated, thereby solving the above problems.

As one embodiment, the characteristics of the above method comprise: when the first signaling configures uplink resources for the first cell, the first node can quickly obtain the uplink resources of the first cell after handing over to the first cell via a protocol layer lower than the RRC layer, thereby solving the above problems.

As one embodiment, the characteristics of the above method comprise: when the first node receives the second signaling to hand over to the first cell, the first node is in uplink synchronization with the first cell.

As one embodiment, the benefits of the above method comprise: quickly obtaining uplink resources, and reducing an uplink transmission latency.

As one embodiment, the benefits of the above method comprise: uplink grant can be activated without RRC layer reconfiguration, and the signaling overhead is reduced.

As one embodiment, the benefits of the above method comprise: activating the uplink grant while handing over to the target cell via a protocol layer lower than the RRC layer, and shortening the interruption time.

According to one aspect of the present application, the above method is characterized in that a candidate for a configured grant type indicated by the first signaling comprises a configured grant type 1 and a configured grant type 2; and only when the configured grant type indicated by the first signaling is the configured grant type 1, the behavior of handing over to the first cell comprises activating the uplink grant configured by the first signaling.

As one embodiment, the characteristics of the above method comprise: when the first node hands over to the first cell via a protocol layer lower than the RRC layer, whether the first node activates the uplink grant configured at the RRC layer depends on the configured grant type of the configured grant configuration in the uplink grant.

As one embodiment, the characteristics of the above method comprise: when the type of the configured grant configuration is the configured grant type 1, the first node activates the configured grant configuration while handing over to the first cell via the protocol layer lower than the RRC layer.

As one embodiment, the characteristics of the above method comprise: when the type of the configured grant configuration is the configured grant type 2, the first node does not activate the configured grant configuration while handing over to the first cell via the protocol layer lower than the RRC layer.

As one embodiment, the benefits of the above method comprise: avoiding resource waste, and maintaining good backward compatibility.

As one embodiment, the benefits of the above method comprise: because the transmission of the configured grant type 2 needs to be activated through dynamic signaling, the above method of activating only the configured grant type 1 is simpler and more efficient, avoids the problem of inconsistent understanding between the terminal and the base station regarding the currently applicable configured grant, and further saves signaling overhead.

According to one aspect of the present application, the above method is characterized in that the expiration of the first timer occurs after the first signaling and before the second signaling.

As one embodiment, the characteristics of the above method comprise: when the expiration of the first timer occurs, the first node does not receive MAC layer signaling or physical layer signaling used for cell handover.

As one embodiment, the characteristics of the above method comprise: before the first node hands over to the first cell through the protocol layer lower than the RRC layer, the first cell is configured with uplink grant via RRC layer signaling.

According to one aspect of the present application, the method is characterized in that, before the second signaling, the first node does not receive air interface signaling for activating a configured grant configuration indicated by the first signaling, and the air interface signaling is RRC signaling or DCI.

As one embodiment, the characteristics of the above method comprise: before the first node hands over to the first cell through the protocol layer lower than the RRC layer, the configured grant configuration indicated by the first signaling is not activated or reconfigured.

As one embodiment, the characteristics of the above method comprise: the second signaling is used for activating the configured grant configuration indicated by the first signaling.

As one embodiment, the benefits of the above method comprise: reducing an uplink transmission latency.

As one embodiment, the benefits of the above method comprise: there is no need to re-indicate the configured grant configuration indicated by the first signaling through additional RRC signaling, thereby saving signaling overhead.

According to one aspect of the present application, the above method is characterized in that when a behavior of the expiration of the first timer occurs, the first cell waits to be handed over to by the first node.

As one embodiment, the characteristics of the above method comprise: when the expiration of the first timer occurs, the first cell does not provide a service to the first node.

As one embodiment, the characteristics of the above method comprise: when the expiration of the first timer occurs, the first cell is a candidate cell of the first node.

As one embodiment, the characteristics of the above method comprise: when the expiration of the first timer occurs, the first cell waits to be dynamically indicated as the serving cell of the first node.

As one embodiment, the characteristics of the above method comprise: the first cell supports cell handover triggered by the first node through L1/L2.

As one embodiment, the characteristics of the above method comprise: the method described in the present application is applicable to a scenario where the target cell of cell handover is a non-serving cell.

According to one aspect of the present application, the above method is characterized in that when a behavior of the expiration of the first timer occurs, the first cell is a serving cell of the first node.

As one embodiment, the characteristics of the above method comprise: the first timer is associated with the first cell.

According to one aspect of the present application, the above method is characterized by comprising:
performing handover to obtain a first serving cell.

As one embodiment, the characteristics of the above method comprise: the first serving cell is the first cell.

As one embodiment, the characteristics of the above method comprise: the first serving cell is a cell other than the first cell.

According to one aspect of the present application, the above method is characterized by comprising:
sending a first signal in a first time-frequency resource set,
wherein the uplink grant configured for the first signaling is used for determining the first time-frequency resource set.

As one embodiment, the characteristics of the above method comprise: the first node does not need to receive dynamic scheduling or RRC reconfiguration for the first time-frequency resources before sending the first signal in the first time-frequency resource set.

As one embodiment, the benefits of the above method comprise: rapidly obtaining uplink resources, and reducing the transmission latency of the first signal.

According to one aspect of the present application, the above method is characterized in that the first node comprises a piece of user equipment.

According to one aspect of the present application, the above method is characterized in that the first node comprises a relay node.

The present application discloses a method for use in a second node for wireless communication, comprising:
sending first signaling, the first signaling being RRC signaling, and the first signaling being used for configuring uplink grant for a first cell; and
sending second signaling, the second signaling being MAC layer signaling or physical layer signaling,
wherein a recipient of the first signaling and the second signaling comprises a first node; in response to an expiration of a first timer, the first node clears the uplink grant at least for the first cell; in response to receiving the second signaling, the first node hands over to the first cell; and a behavior of handing over to the first cell comprises activating the uplink grant configured by the first signaling.

According to one aspect of the present application, the above method is characterized in that a candidate for a configured grant type indicated by the first signaling comprises a configured grant type 1 and a configured grant type 2; and only when the configured grant type indicated by the first signaling is the configured grant type 1, the behavior of handing over to the first cell comprises activating the uplink grant configured by the first signaling.

According to one aspect of the present application, the above method is characterized in that the expiration of the first timer occurs after the first signaling and before the second signaling.

According to one aspect of the present application, the method is characterized in that, before the second signaling, the first node does not receive air interface signaling for activating a configured grant configuration indicated by the first signaling, and the air interface signaling is RRC signaling or DCI.

According to one aspect of the present application, the above method is characterized in that when a behavior of the expiration of the first timer occurs, the first cell waits to be handed over to by the first node.

According to one aspect of the present application, the above method is characterized in that when a behavior of the expiration of the first timer occurs, the first cell is a serving cell of the first node.

According to one aspect of the present application, the above method is characterized by comprising:
the first node handing over to obtain a first serving cell.

According to one aspect of the present application, the above method is characterized by comprising:
receiving a first signal in a first time-frequency resource set,
wherein the uplink grant configured for the first signaling is used for determining the first time-frequency resource set.

According to one aspect of the present application, the above method is characterized in that the second node is user equipment.

According to one aspect of the present application, the above method is characterized in that the second node is a relay node.

The present application discloses a device used in a first node for wireless communications, comprising:
a first receiver receiving first signaling, the first signaling being RRC signaling, and the first signaling being used for configuring uplink grant for a first cell; in response to an expiration of a first timer, clearing the uplink grant at least for the first cell; and receiving second signaling, the second signaling being MAC layer signaling or physical layer signaling; and
a first transmitter, in response to receiving the second signaling, handing over to the first cell,
wherein a behavior of handing over to the first cell comprises activating the uplink grant configured by the first signaling.

The present application discloses a device used in a second node for wireless communications, comprising:
a second transmitter sending first signaling, the first signaling being RRC signaling, and the first signaling being used for configuring uplink grant for a first cell; and sending second signaling, the second signaling being MAC layer signaling or physical layer signaling,
wherein a recipient of the first signaling and the second signaling comprises a first node; in response to an expiration of a first timer, the first node clears the uplink grant at least for the first cell; in response to receiving the second signaling, the first node hands over to the first cell; and a behavior of handing over to the first cell comprises activating the uplink grant configured by the first signaling.

As one embodiment, compared with a traditional solution, the present application has the following favorable, but not limited, advantages:
uplink resources are quickly obtained, and an uplink transmission latency is reduced;
uplink grant can be activated without RRC layer synchronous reconfiguration, and the signaling overhead is reduced; and
the uplink grant is activated while handing over to the target cell, and the interruption time is shortened.

### Brief Description of the Drawings

Other features, objects and advantages of the present application will become more apparent by reading the detailed description of non-limiting embodiments with reference to the following drawings:
FIG. 1 shows a flowchart of transmission of a first node according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a first flowchart of transmission between a first node and a second node according to one embodiment of the present application;
FIG. 6 shows a second flowchart of transmission between a first node and a second node according to one embodiment of the present application;
FIG. 7 shows a schematic diagram of a first node according to one embodiment of the present application;
FIG. 8 shows a schematic diagram of an expiration moment of a first timer according to one embodiment of the present application;
FIG. 9 shows a schematic diagram of a moment before receiving second signaling according to one embodiment of the present application;
FIG. 10 shows a first schematic diagram of a relationship between a first cell and a first node when the first timer expires according to one embodiment of the present application;
FIG. 11 shows a second schematic diagram of a relationship between a first cell and a first node when the first timer expires according to one embodiment of the present application;
FIG. 12 shows a schematic diagram of a configured grant type according to one embodiment of the present application;
FIG. 13 shows a schematic diagram of a configured grant type indicated by first signaling being a configured grant type 1 according to one embodiment of the present application;
FIG. 14 shows a schematic diagram of a configured grant type indicated by first signaling being a configured grant type 2 according to one embodiment of the present application;
FIG. 15 shows a structural block diagram of a processing apparatus in a first node according to one embodiment of the present application; and
FIG. 16 shows a structural block diagram of a processing apparatus in a second node according to one embodiment of the present application.

### Detailed Description of Embodiments

The technical solution of the present application will be further described in detail below in conjunction with the accompanying drawings. It should be noted that, in the absence of conflicts, embodiments and features in the embodiments of the present application may be arbitrarily combined with each other.

### Embodiment 1

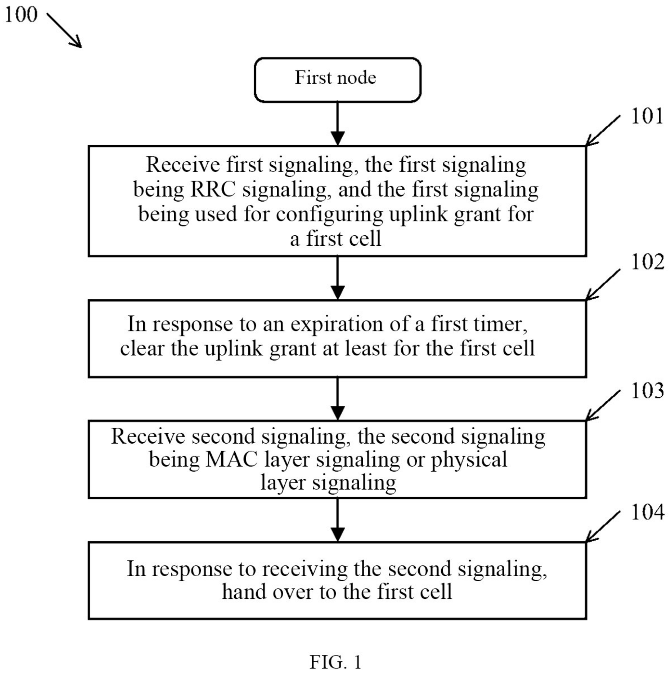

Embodiment 1 illustrates a flowchart of transmission of a first node according to one embodiment of the present application, as shown in FIG. 1. In FIG. 1, each block represents one step. In particular, the order of steps in the block does not represent a specific temporal sequence between various steps.

A first node receives first signaling in step 101, the first signaling being RRC signaling, and the first signaling being used for configuring uplink grant for a first cell; in response to an expiration of a first timer, clears the uplink grant at least for the first cell in step 102; receives second signaling in step 103, the second signaling being MAC layer signaling or physical layer signaling; and in response to receiving the second signaling, hands over to the first cell in step 104.

In Embodiment 1, a behavior of handing over to the first cell comprises activating the uplink grant configured by the first signaling.

As one embodiment, the RRC refers to: Radio Resource Control.

As one embodiment, the MAC layer refers to: a Medium Access Control layer.

As one embodiment, the handover to refers to: switch to.

As one embodiment, the handing over to refers to: handover to.

As one embodiment, the handover to refers to: turn into.

As one embodiment, the handover to refers to: camp to.

As one embodiment, the first signaling is RRC signaling.

As one embodiment, the first signaling comprises information in all or part of fields in one RRC IE (Information Element).

As one embodiment, the first signaling comprises part or all of fields in a *ServingCellConfig* IE.

As one embodiment, the first signaling comprises part or all of fields in an *UplinkConfig* IE.

As one embodiment, the first signaling comprises part or all of fields in a *BWP-Uplink* IE.

As one embodiment, the first signaling comprises part or all of fields in a *BWP-UplinkDedicated* IE.

As one embodiment, the first signaling comprises part or all of fields of a *ConfiguredGrantConfigToAddModList-r16* IE.

As one embodiment, the first signaling comprises part or all of fields in a *ConfiguredGrantConfig* IE.

As one sub-embodiment of this embodiment, the first signaling comprises an *rrc-ConfiguredUplinkGrant* field.

As one sub-embodiment of this embodiment, the first signaling does not comprise an *rrc-ConfiguredUplinkGrant* field.

As one embodiment, the first signaling belongs to a CONTAINING portion of one field in given RRC signaling.

As one sub-embodiment of this embodiment, a name of the given RRC signaling comprises L1.

As one sub-embodiment of this embodiment, a name of the given RRC signaling comprises L2.

As one sub-embodiment of this embodiment, a name of the given RRC signaling comprises L1orL2.

As one sub-embodiment of this embodiment, a name of the given RRC signaling comprises Mobility.

As one sub-embodiment of this embodiment, a name of the given RRC signaling comprises CandidateCell.

As one sub-embodiment of this embodiment, a name of the given RRC signaling comprises Reconfig.

As one sub-embodiment of this embodiment, a name of the given RRC signaling comprises ToAdd.

As one sub-embodiment of this embodiment, a name of the given RRC signaling comprises ModList.

As one sub-embodiment of this embodiment, the CONTAINING portion comprises an RRCReconfiguration IE.

As one embodiment, when the first node receives the first signaling, the first cell is a serving cell of the first node.

As one embodiment, when the first node receives the first signaling, the first cell provides a service to the first node.

As one embodiment, when the first node receives the first signaling, the first cell is a candidate cell of the first node, and the first cell does not provide a service to the first node.

As one embodiment, the first cell corresponds to one *PhysCellld.*

As one embodiment, the first cell corresponds to one PCID.

As one embodiment, the *PhysCellId* corresponding to the first cell is a non-negative integer not greater than 1007.

As one embodiment, the PCID in the present application refers to: a Physical Cell IDentifier.

As one embodiment, the PCID in the present application refers to: a Physical Cell IDentity.

As one embodiment, the PCID in the present application refers to: a Physical-layer Cell IDentity.

As one embodiment, the PCID in the present application refers to: *physCellId.*

As one embodiment, the first signaling is used for configuring uplink grant(s) for the first cell.

As one embodiment, the first signaling is used for indicating the uplink grant for the first cell.

As one embodiment, the first signaling is used for configuring the uplink grant for an uplink carrier (UL carrier) of the first cell.

As one embodiment, the first signaling is used for indicating the uplink grant for an uplink carrier of the first cell.

As one embodiment, the first signaling is used for configuring the uplink grant for a supplementary uplink carrier (SUL carrier) of the first cell.

As one embodiment, the first signaling is used for indicating the uplink grant for a supplementary uplink carrier of the first cell.

As one embodiment, the first signaling is used for configuring the uplink grant for one uplink bandwidth part (BWP) in the first cell.

As one embodiment, the first signaling used for indicating the uplink grant for one uplink BWP in the first cell.

As one embodiment, the first signaling is used for configuring the uplink grant for a plurality of uplink BWPs in the first cell.

As one embodiment, the first signaling is used for indicating the uplink grant for a plurality of uplink BWPs in the first cell.

As one embodiment, the uplink grant comprises one or more ConfiguredGrantConfigs.

As one sub-embodiment of this embodiment, the configured grant configuration corresponds to one or more uplink transmissions that do not comprise dynamic grants.

As one sub-embodiment of this embodiment, the configured grant configuration corresponds to one or more uplink grant(s) corresponding to one Type 1 configured grant.

As one sub-embodiment of this embodiment, the configured grant configuration corresponds to one or more uplink grant(s) corresponding to one Type 2 configured grant.

As one sub-embodiment of this embodiment, the configured grant configuration corresponds to one index.

As one sub-embodiment of this embodiment, the configured grant configuration corresponds to one *configuredGrantConfigIndex.*

As one sub-embodiment of this embodiment, the configured grant configuration corresponds to one *configuredGrantConfigIndexMAC.*

As one embodiment, the first signaling comprises part or all of fields in a *ConfiguredGrantConfig* IE, and the *rrc-ConfiguredUplinkGrant* field in the first signaling indicates the type of the uplink grant.

As one embodiment, the first signaling comprises configuration information on uplink grant for the first cell.

As one sub-embodiment of this embodiment, the configuration information comprises one or more of frequency hopping, a modulation and coding scheme (MCS), power control, a transform precoder, a hybrid automatic repeat request process number (HARQ process number), a demodulation reference signal (DMRS), a time domain resource, a frequency domain resource, an antenna port, and a sounding reference signal (SRS) resource indication.

As one embodiment, the first signaling indicates a first configured grant configuration.

As one embodiment, the first timer is a MAC layer timer.

As one embodiment, the first timer is maintained at a MAC layer.

As one embodiment, the first timer is a time alignment timer.

As one embodiment, the first timer is used for maintaining an uplink time alignment.

As one embodiment, the first timer is used for determining whether uplink timing is maintained.

As one embodiment, the first timer is used for maintaining an uplink time alignment with the first node serving cell.

As one embodiment, the first timer is used for determining whether uplink timing with the first node serving cell is maintained.

As one embodiment, the first timer comprises *timeAlignmentTimer.*

As one embodiment, the first timer comprises *timeAlignmentTimer* of the MAC layer.

As one embodiment, the first timer is configured to the first cell.

As one embodiment, the first timer is configured to a first timing advance group (TAG), and the first TAG comprise the first cell.

As one embodiment, the first timer is associated with a first TAG, and one or more cells corresponding to the first TAG comprises the first cell.

As one sub-embodiment of this embodiment, the first TAG is one primary timing advance group (PTAG).

As one sub-embodiment of this embodiment, the first TAG is a secondary timing advance group (STAG).

As one sub-embodiment of this embodiment, the one or more cells corresponding to the first TAG use the same timing reference cell and the same timing advance.

As one sub-embodiment of this embodiment, when the first timer runs, an uplink time of one or more cells corresponding to the first TAG is considered aligned.

As one dependent embodiment of this sub-embodiment, the meaning of the "consider" comprises consider.

As one dependent embodiment of this sub-embodiment, the meaning of the "consider" comprises assume.

As one dependent embodiment of this sub-embodiment, when the first timer runs, the uplink time of the first cell is considered aligned.

As one sub-embodiment of this embodiment, when the first timer expires, the uplink time of one or more cells corresponding to the first TAG is considered misaligned.

As one dependent embodiment of this sub-embodiment, when the first timer expires, the uplink time of the first cell is considered misaligned.

As one embodiment, one or more cells comprised in any two different TAGs are orthogonal.

As one embodiment, when a value of the first timer is 0, the first timer expires.

As one embodiment, an expiration value of the first timer is configurable.

As one embodiment, an expiration value of the first timer is preconfigured.

As one embodiment, an expiration value of the first timer is predefined.

As one embodiment, the meaning of the phrase "in response to the expiration of the first timer" comprises: after the first timer expires.

As one embodiment, the meaning of the phrase "in response to the expiration of the first timer" comprises: at least after the first timer expires.

As one embodiment, the meaning of the phrase "in response to the expiration of the first timer" comprises: when the first timer expires.

As one embodiment, the meaning of the phrase "in response to the expiration of the first timer" comprises: if the first timer expires.

As one embodiment, in response to an expiration of the first timer, the uplink grant at least for the first cell is cleared.

As one embodiment, the behavior of "clearing the uplink grant at least for the first cell" comprises: clearing the uplink grant configured for the first cell.

As one embodiment, the behavior of "clearing the uplink grant at least for the first cell" comprises: clearing all configured grant configurations configured for the first cell.

As one embodiment, the behavior of "clearing the uplink grant at least for the first cell" comprises: clearing the configured uplink grants configured for the first cell, the uplink grants comprising the configured uplink grants.

As one embodiment, the behavior of "clearing the uplink grant at least for the first cell" comprises: clearing uplink grant configured for all cells in the cell group corresponding to the first cell.

As one embodiment, the behavior of "clearing the uplink grant at least for the first cell" comprises: clearing all configured grant configurations configured for all cells in the cell group corresponding to the first cell.

As one embodiment, the behavior of "clearing the uplink grant at least for the first cell" comprises: clearing all configured uplink grants configured for all cells in the cell group corresponding to the first cell.

As one embodiment, a cell group corresponding to the first cell in the present application is one PTAG, and the PTAG comprises the first cell.

As one embodiment, a cell group corresponding to the first cell in the present application is one STAG, and the STAG comprises the first cell.

As one embodiment, the first timer is associated with a first TAG, and one or more cells corresponding to the first TAG comprise the first cell. The behavior of "clearing the uplink grant at least for the first cell" comprises: clearing the uplink grant configured for the one or more cells corresponding to the first TAG.

As one embodiment, the first timer is associated with a first TAG, and one or more cells corresponding to the first TAG comprise the first cell. The behavior of "clearing the uplink grant at least for the first cell" comprises: clearing all configured grant configurations configured for the one or more cells corresponding to the first TAG.

As one embodiment, the first timer is associated with a first TAG, and one or more cells corresponding to the first TAG comprise the first cell. The behavior of "clearing the uplink grant at least for the first cell" comprises: clearing the configured uplink grant configured for the one or more cells corresponding to the first TAG.

As one embodiment, the behavior of "clearing the uplink grant at least for the first cell" comprises: clearing uplink grant configured for all cells corresponding to the first node.

As one embodiment, the behavior of "clearing the uplink grant at least for the first cell" comprises: clearing all configured grant configurations configured for all cells corresponding to the first node.

As one embodiment, the behavior of "clearing the uplink grant at least for the first cell" comprises: clearing all configured uplink grants configured for all cells corresponding to the first node.

As one sub-embodiment of the above three embodiments, all cells corresponding to the first node comprise all serving cells configured to the first node.

As one sub-embodiment of the above three embodiments, all cells corresponding to the first node comprise all candidate cells configured to the first node.

As one embodiment, the second signaling is MAC layer signaling.

As one embodiment, the second signaling comprises a MAC protocol data unit (PDU).

As one embodiment, the second signaling is a MAC PDU.

As one embodiment, the second signaling comprises a MAC subheader.

As one embodiment, the second signaling is a MAC subheader.

As one embodiment, the second signaling comprises a MAC control element (CE).

As one embodiment, the second signaling is a MAC CE.

As one embodiment, the second signaling is physical layer signaling.

As one embodiment, the second signaling is physical layer control signaling.

As one embodiment, the second signaling comprises sidelink control information (SCI).

As one embodiment, the second signaling is an SCI.

As one embodiment, the second signaling comprises a slot format indication (SFI).

As one embodiment, the second signaling is an SFI.

As one embodiment, the second signaling comprises a physical downlink control channel (PDCCH) order.

As one embodiment, the second signaling comprises an enhancement PDCCH order.

As one embodiment, the second signaling comprises information in one or more fields in downlink control information (DCI).

As one embodiment, the second signaling is a DCI.

As one embodiment, the second signaling comprises a random access response (RAR).

As one embodiment, the second signaling comprises a message B (Msg B).

As one embodiment, the second signaling comprises a timing advance command.

As one sub-embodiment of this embodiment, the timing advance command is used for determining a timing advance (TA) value for the first node during uplink sending to the first cell.

As one dependent embodiment of this sub-embodiment, the first node starts corresponding uplink frame sending at a time indicated by the TA value before starting of a downlink frame.

As one sub-embodiment of this embodiment, the timing advance command indicates an index value *T_{A}*, and the *T_{A}* is used for controlling a timing adjustment.

As one sub-embodiment of this embodiment, the second signaling is used for indicating the TAG, and the timing advance command is applied to the TAG.

As one dependent embodiment of this embodiment, the TAG is the first TAG in the present application.

As one embodiment, the second signaling comprises a timing advance command MAC CE.

As one embodiment, the second signaling comprises an absolute timing advance command MAC CE.

As one embodiment, the second signaling is cell handover signaling.

As one embodiment, the second signaling is cell handover signaling triggered by a MAC layer.

As one embodiment, the second signaling comprises a cell switch command.

As one embodiment, the second signaling is an LTM cell switch.

As one embodiment, a name of the second signaling comprises "LTM".

As one embodiment, a name of the second signaling comprises "L1".

As one embodiment, a name of the second signaling comprises "L2".

As one embodiment, a name of the second signaling comprises "L2".

As one embodiment, a name of the second signaling comprises "triggered".

As one embodiment, a name of the second signaling comprises "switch".

As one embodiment, a name of the second signaling comprises "mobility".

As one embodiment, the meaning of the phrase "in response to receiving the second signaling" comprises: after receiving the second signaling.

As one embodiment, the meaning of the phrase "in response to receiving the second signaling" comprises: at least after receiving the second signaling.

As one embodiment, the meaning of the phrase "in response to receiving the second signaling" comprises: when receiving the second signaling.

As one embodiment, the meaning of the phrase "in response to receiving the second signaling" comprises: if the second signaling is received.

As one embodiment, the meaning of the behavior of "handover to the first cell" comprises: the first cell becomes a serving cell of the first node.

As one embodiment, the meaning of the behavior of "handover to the first cell" comprises: handover to the first cell.

As one embodiment, the meaning of the behavior of "handover to the first cell" comprises: handover to the first cell through a protocol layer below an RRC layer.

As one embodiment, the meaning of the behavior of "handover to the first cell" comprises: handover to the first cell through mobility of L1/L2.

As one embodiment, the behavior of "handover to" is dynamic.

As one embodiment, the second signaling is used for indicating the first cell.

As one embodiment, the second signaling is used for determining a PCID of the first cell.

As one embodiment, the second signaling is used for indicating a PCID of the first cell.

As one embodiment, the meaning of the "activate" comprises: enable or re-enable.

As one embodiment, the meaning of the "activate" comprises: trigger.

As one embodiment, the meaning of the "activate" comprises: activate or re-activate.

As one embodiment, the meaning of the "activate" comprises: start or re-start.

As one embodiment, when the uplink grant configured by the first signaling is not activated, the uplink grant configured by the first signaling cannot be executed.

As one embodiment, when the uplink grant configured by the first signaling is not activated, data cannot be sent using a physical uplink shared channel (PUSCH) corresponding to the uplink grant configured by the first signaling.

As one embodiment, when the uplink grant configured by the first signaling is not activated, the physical uplink shared channel (PUSCH) corresponding to the uplink grant configured by the first signaling is not sent.

As one embodiment, the behavior of "activating the uplink grant configured by the first signaling" refers to that when data is to be sent, the data is sent using the uplink grant configured by the first signaling.

As one embodiment, the behavior of "activating the uplink grant configured by the first signaling" refers to that when data is to be sent, the data is sent using the PUSCH corresponding to the uplink grant configured by the first signaling.

As one embodiment, a logical channel corresponding to the data is configured to allow use of the uplink grant configured by the first signaling.

As one embodiment, *allowedCG-List* used for configuring the logical channel corresponding to the data comprises an index of the configured grant indicated by the first signaling.

### Embodiment 2

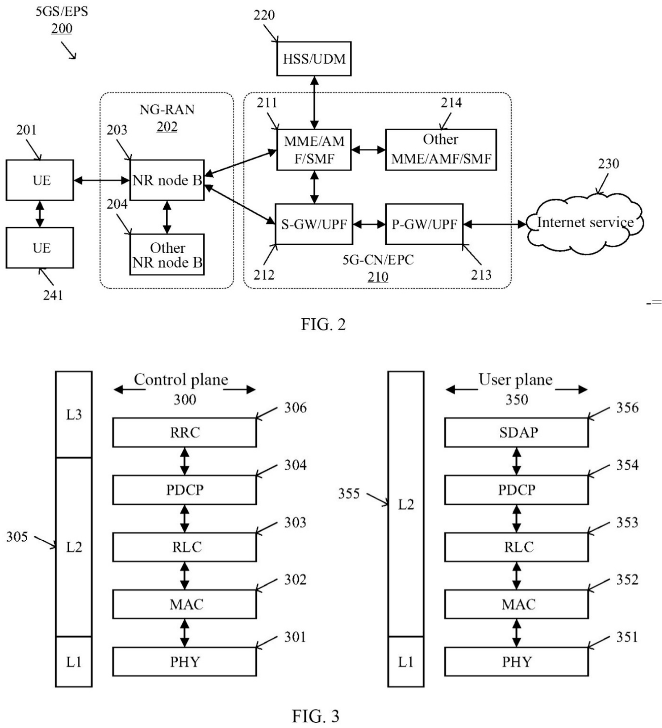

Embodiment 2 illustrates a schematic diagram of a network architecture according to one embodiment of the present application, as shown in FIG. 2.

FIG. 2 illustrates the network architecture of LTE (Long-Term Evolution), LTE-A (Long-Term Evolution Advanced) and future 5G systems. The network architecture of LTE, LTE-A and future 5G systems is called EPS (Evolved Packet System). 5G NR or LTE network architectures may be referred to as 5GS (5G System)/EPS 200 or some other suitable terms. 5GS/EPS 200 may comprise one or more UE 201, UE 241 performing sidelink communication with the UE 201, NG-RAN (Next Generation Radio Access Network) 202, 5G-CN (5G Core Network)/EPC (Evolved Packet Core) 210, HSS (Home Subscriber Server)/UDM (Unified Data Management) 220, and Internet Service 230. The 5GS/EPS 200 may be interconnected with other access networks, but these entities/interfaces are not shown for simplicity. As shown in FIG. 2, the 5GS/EPS 200 provides packet switching services, however those skilled in the art will readily understand that various concepts presented throughout the present application can be extended to networks providing circuit switching services. The NG-RAN 202 comprises an NR Node B (gNB) 203 and other gNB 204. The gNB 203 provides user and control plane protocol termination toward the UE 201. The gNB 203 may be connected to other gNB 204 via an Xn interface (for example, backhaul). The gNB 203 may also be referred to as a base station, a base transceiver station, a radio base station, a radio transceiver, a transceiver function, a basic service set (BSS), an extended service set (ESS), a TRP (Transmitter Receiver Point) or some other suitable terms. The gNB 203 provides the UE 201 with access points to the 5G-CN/EPC 210. Examples of the UE 201 comprise cellular telephones, smart phones, Session Initiation Protocol (SIP) telephones, laptops, personal digital assistants (PDAs), satellite radios, global positioning systems, multimedia apparatuses, video apparatuses, digital audio players (for example, MP3 players), cameras, game consoles, drones, aircraft, narrowband physical network devices, machine type communication devices, land vehicles, automobiles, wearable devices, or any other similar functional apparatuses. Those skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB 203 is connected to the 5G-CN/EPC 210 through an S1/NG interface. The 5G-CN/EPC 210 comprises a mobility management entity (MME)/authentication management field (AMF)/session management function (SMF) 211, other MME/AMF/SMF 214, a service gateway (S-GW)/user plane function (UPF) 212, and a packet data network gateway (P-GW)/UPF 213. The MME/AMF/SMF 211 is a control node that processes signaling between the UE 201 and the 5G-CN/EPC 210. Generally, the MME/AMF/SMF 211 provides bearer and connection management. All user Internet protocol (IP) packets are transmitted through the S-GW/UPF 212, and the S-GW/UPF 212 itself is connected to the P-GW/UPF 213. The P-GW provides UE IP address allocation and other functions. The P-GW/UPF 213 is connected to the Internet services 230. The Internet services 230 comprise the operator's corresponding Internet protocol services, which may specifically comprise the Internet, intranets, IMS (IP Multimedia Subsystem) and packet switching services.

As one embodiment, the first node in the present application comprises the UE 201.

As one embodiment, the second node in the present application comprises the gNB 203.

As one embodiment, the UE 201 supports relay transmission.

As one embodiment, the UE 201 is/comprises a mobile phone.

As one embodiment, the UE 201 is/comprises a vehicle comprising an automobile.

As one embodiment, the gNB 203 is a macro cell base station.

As one embodiment, the gNB 203 is a micro cell base station.

As one embodiment, the gNB 203 is a pico cell base station.

As one embodiment, the gNB 203 is a femtocell.

As one embodiment, the gNB 203 is a base station device supporting a large-latency difference.

As one embodiment, the gNB 203 is one flying platform device.

As one embodiment, the gNB 203 is a satellite device.

As one embodiment, the gNB 203 is a test device (such as a transceiving apparatus that simulates some functions of a base station, and a signaling tester).

As one embodiment, a wireless link from the UE 201 to the gNB 203 is an uplink, and the uplink is used for executing uplink transmission.

As one embodiment, the wireless link from the gNB 203 to the UE 201 is a downlink, and the downlink is used for executing downlink transmission.

As one embodiment, the wireless link between the UE 201 and the gNB 203 comprises a cellular network link.

As one embodiment, the UE 201 and the gNB 203 are connected via a Uu air interface.

As one embodiment, the sender of the first signaling comprises the gNB 203.

As one embodiment, the recipient of the first signaling comprises the UE 201.

As one embodiment, the sender of the second signaling comprises the gNB 203.

As one embodiment, the recipient of the second signaling comprises the UE 201.

As one embodiment, the sender of the first signal comprises the UE 201.

As one embodiment, the recipient of the first signal comprises the gNB 203.

As one embodiment, the UE 201 supports cell level mobility based on L1/L2.

As one embodiment, the UE 201 supports L1/L2 mobility between the serving cell and the target cell.

As one embodiment, the UE 201 supports beam level mobility between the serving cell and the target cell.

As one embodiment, the UE 201 supports beam management between the serving cell and the target cell.

As one embodiment, the UE 201 supports L1/L2 beam management between the serving cell and the target cell.

As one embodiment, the UE 201 supports multi-TRP between cells.

### Embodiment 3

Embodiment 3 illustrates a schematic diagram of an embodiment of a wireless protocol architecture of a user plane and a control plane according to one embodiment of the present application, as shown in FIG. 3.

FIG. 3 is a schematic diagram illustrating an embodiment of a radio protocol architecture used for a user plane 350 and a control plane 300. FIG. 3 presents the radio protocol architecture of the control plane 300 which is used between a first communication node device (UE or RSU (Road Side Unit) in V2X (Vehicle to Everything), onboard devices, or onboard communication modules) and a second node device (gNB, UE, or RSU in V2X, onboard devices, or onboard communication modules), or between two pieces of UE using three layers: Layer 1 (L1), Layer 2 (L2), and Layer 3 (L3). L1 is the lowest layer and implements various PHY (physical layer) signal processing functions. L1 is referred to herein as PHY 301. L2 305 is above the PHY 301 and is responsible for the link between the first node device and the second node device, or between two pieces of UE through the PHY 301. L2 305 comprises a MAC sublayer 302, an RLC (Radio Link Control) sublayer 303, and a PDCP (Packet Data Convergence Protocol) sublayer 304, which terminate at the second node device. The PDCP sublayer 304 provides multiplexing between different radio bearers and logical channels. The PDCP sublayer 304 also provides security through packet data encryption, and provides handover support between the second communication node device and the first communication node device. The RLC sublayer 303 provides segmentation and reassembly of upper layer data packets, retransmission of lost data packets, and reordering of data packets to compensate for disordered reception caused by HARQ. The MAC sublayer 302 provides multiplexing between logical channels and transport channels. The MAC sublayer 302 is also responsible for allocating various radio resources (for example, resource blocks) in a cell among the first communication node devices. The MAC sublayer 302 is also responsible for HARQ operations. The RRC sublayer 306 in L3 in the control plane 300 is responsible for obtaining radio resources (i.e., radio bearers) and configuring the lower layer using RRC signaling between the second communication node device and the first communication node device. The radio protocol architecture of the user plane 350 comprises Layer 1 (L1) and Layer 2 (L2). Regarding the radio protocol architecture used between the first communication node device and the second communication node device in the user plane 350, the physical layer 351, a PDCP sublayer 354 in L2 355, an RLC sublayer 353 in L2 355 and a MAC sublayer 352 in L2 355 are generally the same as the corresponding layers and sublayers in the control plane 300, but the PDCP sublayer 354 also provides header compression for upper layer data packets to reduce radio transmission overhead. L2 355 in the user plane 350 also comprises an SDAP (Service Data Adaptation Protocol) sublayer 356, and the SDAP sublayer 356 is responsible for mapping between QoS (Quality of Service) streams and data radio bearers (DRB) to support service diversity. Although not shown, the first communication node device may have several upper layers above L2 355, comprising a network layer (for example, IP layer) terminated at P-GW on the network side and an application layer terminated at the other end of the connection (for example, a remote UE, server, etc.).

As one embodiment, the radio protocol architecture in FIG. 3 is applicable to a first node in the present application.

As one embodiment, the radio protocol architecture in FIG. 3 is applicable to a second node in the present application.

As one embodiment, the first signaling is generated in the RRC 306.

As one embodiment, the second signaling is generated in the PHY 301.

As one embodiment, the second signaling is generated in the MAC sublayer 302 or the MAC sublayer 352.

As one embodiment, the higher level in the present application refers to a layer above the physical layer.

As one embodiment, the higher level in the present application comprises a MAC layer.

As one embodiment, the higher level in the present application comprises an RRC layer.

As one embodiment, the protocol layer below the RRC layer in the present application comprises a MAC layer.

As one embodiment, the protocol layer below the RRC layer in the present application comprises a physical layer.

### Embodiment 4

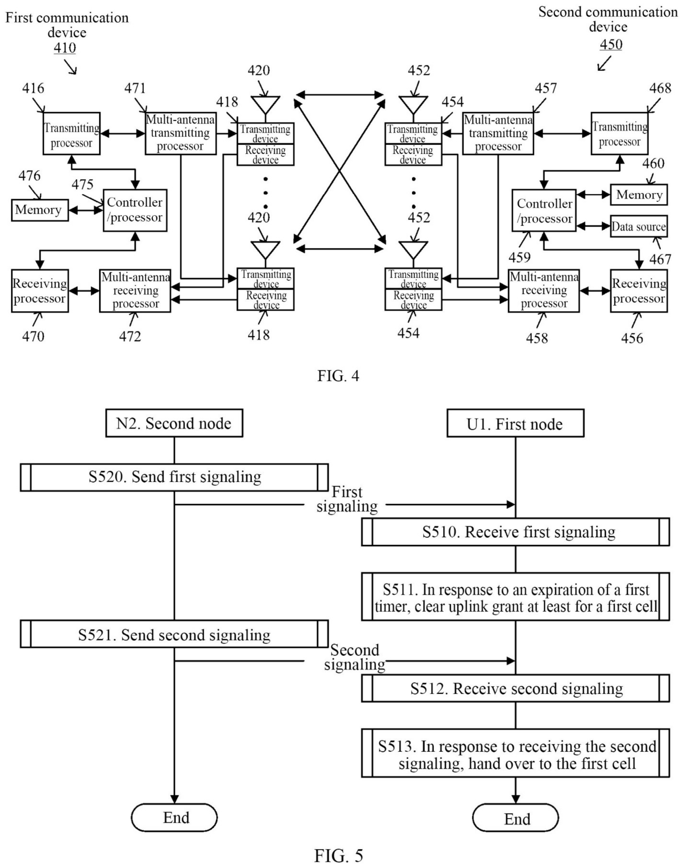

Embodiment 4 illustrates a schematic diagram of a first communication device and a second communication device according to one embodiment of the present application, as shown in FIG. 4. FIG. 4 is a block diagram of the first communication device 410 and the second communication device 450 that communicate with each other in the access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, upper layer data packets from the core network are provided to the controller/processor 475. The controller/processor 475 implements the functionality of L2. In DL, the controller/processor 475 provides header compression, encryption, packet segmentation and reordering, multiplexing between logical channels and transport channels, and radio resource assignment of the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for L1 (that is, the physical layer). The transmitting processor 416 implements encoding and interleaving to facilitate forward error correction (FEC) at the second communication device 450, and mapping of signal clusters based on various modulation schemes (for example, Binary Phase Shift Keying (BPSK), Quadrature Phase Shift Keying (QPSK), M-Phase Shift Keying (M-PSK), and M-Quadrature Amplitude Modulation (M-QAM)). The multi-antenna transmitting processor 471 performs digital spatial precoding of the encoded and modulated symbols, comprising codebook-based precoding and non-codebook-based precoding and beamforming processing, to generate one or more parallel streams. The transmitting processor 416 then maps each parallel stream to a subcarrier, multiplexes the modulated symbols with a reference signal (for example, pilot) in the time domain and/or frequency domain, and then uses Inverse Fast Fourier Transform (IFFT) to generate a physical channel carrying the time domain multi-carrier symbol stream. The multi-antenna transmitting processor 471 then performs transmit analog precoding/beamforming operations on the time domain multi-carrier symbol stream. Each transmitting device 418 converts the baseband multi-carrier symbol stream provided by the multi-antenna transmitting processor 471 into a radio frequency stream, and then provides it to different antennas 420.

In the transmission from the first communication device 410 to the second communication device 450, at the second communication device 450, each receiving device 454 receives a signal through its corresponding antenna 452. Each receiving device 454 recovers information modulated to the radio frequency carrier and converts the radio frequency stream into a baseband multi-carrier symbol stream to provide it to the receiving processor 456. The receiving processor 456 and the multi-antenna receiving processor 458 implement various signal processing functions of L1. The multi-antenna receiving processor 458 performs receiving analog precoding/beamforming operations on the baseband multi-carrier symbol stream from the receiving device 454. The receiving processor 456 uses Fast Fourier Transform (FFT) to convert the baseband multi-carrier symbol stream from the time domain to the frequency domain after the receiving analog precoding/beamforming operations. In the frequency domain, the physical layer data signals and the reference signals are demultiplexed by the receiving processor 456, where the reference signals are used for channel estimation, and the data signals undergo multi-antenna detection in the multi-antenna receiving processor 458 to recover any parallel streams destined for the second communication device 450. Symbols on each parallel stream are demodulated and recovered in the receiving processor 456, and soft decisions are generated. The receiving processor 456 then decodes and deinterleaves the soft decisions to recover upper layer data and control signals transmitted by the first communication device 410 on the physical channel. The upper layer data and control signals are then provided to the controller/processor 459. The controller/processor 459 implements the functions of L2. The controller/processor 459 may be associated with a memory 460 storing program codes and data. The memory 460 may be referred to as a computer-readable medium. In DL, the controller/processor 459 provides demultiplexing between transport channels and logical channels, packet reassembly, decryption, header decompression, and control signal processing to recover upper layer data packets from the core network. The upper layer data packets are then provided to all protocol layers above L2. Various control signals may also be provided to an L3 for L3 processing. The controller/processor 459 is also responsible for error detection using Acknowledgement (ACK) and/or Negative Acknowledgement (NACK) protocols to support HARQ operations.

In the transmission from the second communication device 450 to the first communication device 410, at the second communication device 450, the data source 467 is used for providing upper layer data packets to the controller/processor 459. The data source 467 represents all protocol layers above L2. Similar to the transmission function at the first communication device 410 as described for the DL, the controller/processor 459 implements header compression, encryption, packet segmentation and reordering, and multiplexing between logical channels and transport channels based on wireless resource assignment of the first communication device 410, thereby implementing L2 functions for the user plane and the control plane. The controller/processor 459 is also responsible for HARQ operations, retransmission of lost packets, and signaling to the first communication device 410. The transmitting processor 468 performs modulation mapping and channel encoding processing, and the multi-antenna transmitting processor 457 performs digital multi-antenna spatial precoding, including codebook-based precoding and non-codebook-based precoding, and beamforming processing. The transmitting processor 468 modulates the resulting parallel streams into multi-carrier/single-carrier symbol streams. These streams undergo analog precoding/beamforming operations in the multi-antenna transmitting processor 457 before being provided to different antennas 452 via transmitting device 454. Each transmitting device 454 first converts baseband symbol streams provided from the multi-antenna transmitting processor 457 into radio frequency symbol streams, and then provides the radio frequency symbol streams to the antenna 452.

In the transmission from the second communication device 450 to the first communication device 410, the function at the first communication device 410 is similar to the reception function at the second communication device 450 as described for the transmission from the first communication device 410 to the second communication device 450. Each receiving device 418 receives the radio frequency signals through its corresponding antenna 420, converts the received radio frequency signals into baseband signals, and provides the baseband signals to the multi-antenna receiving processor 472 and the receiving processor 470. The receiving processor 470 and the multi-antenna receiving processor 472 jointly implement the function of L1. The controller/processor 475 implements L2 functions. The controller/processor 475 may be associated with a memory 476 storing program codes and data. The memory 476 may be referred to as a computer-readable medium. The controller/processor 475 provides demultiplexing between transmission channels and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using ACK and/or NACK protocols to support HARQ operations.

As one embodiment, the second communication device 450 comprises: at least one processor and at least one memory, the at least one memory comprising computer program codes. The at least one memory and the computer program codes are configured to be used together with the at least one processor. The second communication device 450 apparatus at least receives first signaling, the first signaling being RRC signaling, and the first signaling being used for configuring uplink grant for a first cell; in response to an expiration of a first timer, clearing the uplink grant at least for the first cell; and receives second signaling, the second signaling being DCI or a MAC CE; in response to receiving the second signaling, handing over to the first cell, wherein the behavior of handing over to the first cell comprises activating the uplink grant configured by the first signaling.

As one embodiment, the second communication device 450 comprises: a memory storing a computer-readable instruction program that generates an action when executed by at least one processor, the action comprising: receiving first signaling; and clearing the uplink grant at least for the first cell; receiving second signaling, handing over to the first cell.

As one embodiment, the first communication device 410 comprises: at least one processor and at least one memory, the at least one memory comprising computer program codes. The at least one memory and the computer program codes are configured to be used together with the at least one processor. The first communication device 410 apparatus at least: sends first signaling, the first signaling being RRC signaling, and the first signaling being used for configuring uplink grant for a first cell; and sends second signaling, the second signaling being DCI or a MAC CE. A recipient of the first signaling and the second signaling comprises a second communication device 450. In response to an expiration of a first timer, the second communication device 450 clears the uplink grant at least for the first cell. In response to receiving the second signaling, the second communication device 450 hands over to the first cell, a behavior of handing over to the first cell comprises activating the uplink grant configured by the first signaling.

As one embodiment, the first communication device 410 comprises: a memory storing a computer-readable instruction program that generates an action when executed by at least one processor, the action comprising: sending first signaling; and sending second signaling.

As one embodiment, the first node in the present application comprises the second communication device 450.

As one embodiment, the second node in the present application comprises the first communication device 410.

As one embodiment, at least one of {the antenna 420, the transmitting device 418, the transmitting processor 416, the multi-antenna transmitting processor 471, the controller/processor 475, or the memory 476} is used for sending the first signaling; and at least one of {the antenna 452, the receiving device 454, the receiving processor 456, the multi-antenna receiving processor 458, the controller/processor 459, the memory 460, or the data source 467} is used for receiving the first signaling.

As one embodiment, at least one of {the antenna 420, the transmitting device 418, the transmitting processor 416, the multi-antenna transmitting processor 471, the controller/processor 475, or the memory 476} is used for sending the second signaling; and at least one of {the antenna 452, the receiving device 454, the receiving processor 456, the multi-antenna receiving processor 458, the controller/processor 459, the memory 460, or the data source 467} is used for receiving the second signaling.

As one embodiment, in response to an expiration of a first timer, at least one of {the antenna 452, the receiving device 454, the receiving processor 456, the multi-antenna receiving processor 458, the controller/processor 459, the memory 460, or the data source 467} is used for clearing the uplink grant at least for the first cell.

As one embodiment, in response to receiving the second signaling, at least one of {the antenna 452, the transmitting device 454, the transmitting processor 468, the multi-antenna transmitting processor 457, the controller/processor 459, the memory 460, or the data source 467} is used for handover to the first cell.

### Embodiment 5

Embodiment 5 illustrates a first flowchart of transmission between a first node and a second node according to one embodiment of the present application. In FIG. 5, communication is performed between the first node U1 and the second node N2 through a wireless link. It should be particularly noted that the order in this embodiment does not limit the signal transmission order and implementation order in the present application. In the case of no conflict, the embodiments, sub-embodiments and dependent embodiments in Embodiment 5 can be applied to Embodiment 6. On the contrary, in the case of no conflict, the embodiments, sub-embodiments and dependent embodiments in Embodiment 6 can be applied to Embodiment 5.

For the first node **U1**, in step S510, the first signaling is received; in step S511, in response to the expiration of a first timer, at least an uplink grant for the first cell is cleared; in step S512, a second signaling is received; in step S513, in response to receiving the second signaling, the first cell is handed over to.

For the second node N2, in step S520, the first signaling is sent; in step S521, second signaling is sent.

In Embodiment 5, the first signaling is RRC signaling, and the first signaling is used for configuring uplink grant for a first cell; the second signaling is MAC layer signaling or physical layer signaling; a behavior of handing over to the first cell comprises activating the uplink grant configured by the first signaling.

As one embodiment, the first node U1 is the first node in the present application.

As one embodiment, the second node N2 is the second node in the present application.

As one embodiment, an air interface between the second node N2 and the first node U1 comprises a wireless interface between a base station device and user equipment.

As one embodiment, an air interface between the second node N2 and the first node U1 comprises a wireless interface between a relay node device and user equipment.

As one embodiment, an air interface between the second node N2 and the first node U1 comprises a wireless interface between user equipment and user equipment.

As one embodiment, step S511 further comprises: determining that the first timer expires.

As one sub-embodiment of this embodiment, a value of the first timer is 0, and the first timer expires.

As one sub-embodiment of this embodiment, an expiration value of the first timer is used for determining that the first timer expires.

As one embodiment, the first signaling is transmitted on a downlink physical data channel (i.e., a downlink channel that can be used for carrying physical layer data).

As one embodiment, the physical layer channel occupied by the first signaling comprises a physical downlink shared channel (PDSCH).

As one embodiment, the second signaling is transmitted on a downlink physical control channel (i.e., a downlink channel that can only be used for carrying physical layer control signaling).

As one embodiment, the physical layer channel occupied by the second signaling comprises a physical downlink control channel (PDCCH).

### Embodiment 6

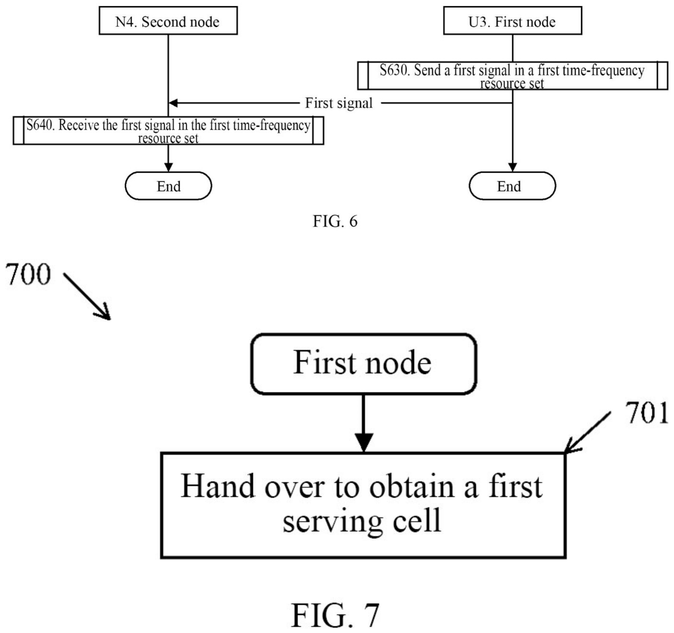

Embodiment 6 illustrates a second flowchart of transmission between a first node and a second node according to one embodiment of the present application. In FIG. 6, communication is performed between the first node U3 and the second node N4 through a wireless link. It should be particularly noted that the order in this embodiment does not limit the signal transmission order and implementation order in the present application. In the case of no conflict, the embodiments, sub-embodiments and dependent embodiments in Embodiment 6 can be applied to Embodiment 5. On the contrary, in the case of no conflict, the embodiments, sub-embodiments and dependent embodiments in Embodiment 5 can be applied to Embodiment 6.

For the first node U3, in step S630, a first signal is sent in a first time-frequency resource set.

For the second node N4, in step S640, the first signal is received in the first time-frequency resource set.

In Embodiment 6, the uplink grant configured for the first signaling is used for determining the first time-frequency resource set.

As one embodiment, the first node U3 is the first node in the present application.

As one embodiment, the second node N4 is the second node in the present application.

As one embodiment, an air interface between the second node N4 and the first node U3 comprises a wireless interface between a base station device and user equipment.

As one embodiment, an air interface between the second node N4 and the first node U3 comprises a wireless interface between a relay node device and user equipment.

As one embodiment, an air interface between the second node N4 and the first node U3 comprises a wireless interface between user equipment and user equipment.

As one embodiment, the first time-frequency resource set comprises a positive integer number of resource elements (REs).

As one embodiment, the first time-frequency resource set occupies subcarriers corresponding to a positive integer number of resource blocks (RBs) in frequency domain.

As one embodiment, the first time-frequency resource set occupies subcarriers corresponding to a positive integer number of continuous RBs in frequency domain.

As one embodiment, the first time-frequency resource set occupies discontinuous RBs in frequency domain.

As one embodiment, the first time-frequency resource set occupies a positive integer number of orthogonal frequency division multiplexing (OFDM) symbols in time domain.

As one embodiment, the first time-frequency resource set occupies a positive integer number of continuous OFDM symbols in time domain.

As one embodiment, the first time-frequency resource set occupies discontinuous OFDM symbols in time domain.

As one embodiment, the uplink grant configured for the first signaling is used for determining the first time-frequency resource set.

As one embodiment, one configured grant configuration in the uplink grant configured for the first signaling is used for determining the first time-frequency resource set.

As one embodiment, the first signaling comprises configuration information on the uplink grant, and the configuration information comprises the first time-frequency resource set.

As one embodiment, the first node does not need to receive scheduling of dynamic signaling for the first signal before sending the first signal in the first time-frequency resource set.

As one sub-embodiment of this embodiment, the dynamic signaling for the first signal comprises DCI.

As one sub-embodiment of this embodiment, the dynamic signaling for the first signal comprises RAR UL grant.

As one sub-embodiment of this embodiment, the dynamic signaling for the first signal comprises fallback RAR UL grant.

As one embodiment, the first node does not need to receive an RRC-based reconfiguration for the configured grant configuration associated with the first time-frequency resource set before sending the first signal in the first time-frequency resource set.

As one sub-embodiment of this embodiment, the "RRC-based reconfiguration for the configured grant configuration associated with the first time-frequency resource set" comprises part or all of fields in an *RRCreconfiguration* IE.

As one sub-embodiment of this embodiment, the "RRC-based reconfiguration for the configured grant configuration associated with the first time-frequency resource set" comprises part or all of fields in an *RRCReestablishment* IE.

As one sub-embodiment of this embodiment, the "RRC-based reconfiguration for the configured grant configuration associated with the first time-frequency resource set" comprises part or all of fields in an *RRCResume* IE.

As one sub-embodiment of this embodiment, the "RRC-based reconfiguration for the configured grant configuration associated with the first time-frequency resource set" comprises part or all of fields in an *RRCSetup* IE.

As one sub-embodiment of this embodiment, the "RRC-based reconfiguration for the configured grant configuration associated with the first time-frequency resource set" comprises part or all of fields in a *ConfiguredGrantConfig* IE.

As one embodiment, the first node needs to activate the uplink grant configured by the first signaling before sending the first signal in the first time-frequency resource set.

As one sub-embodiment of this embodiment, the second signaling is used for activating the uplink grant configured by the first signaling.

As one embodiment, step S630 is after step S513 in Embodiment 5 of the present application of performing handover to the first cell; and step S640 is after step S522 in Embodiment 5 of the present application of sending second signaling.

As one embodiment, step S630 is after step S510 in Embodiment 5 of the present application of receiving the first signaling; and step S640 is before step S520 in Embodiment 5 of the present application of sending the second signaling.

As one embodiment, step S630 is before step S511 in Embodiment 5 of the present application of in response to expiration of a first timer, clearing at least an uplink grant for the first cell; and step S640 is before step S520 in Embodiment 5 of the present application of sending the second signaling.

As one embodiment, when the first node sends the first signal in the first time-frequency resource set, the first timer runs.

As one embodiment, when the first node sends the first signal in the first time-frequency resource set, the first timer does not expire.

As one embodiment, when the first node sends the first signal in the first time-frequency resource set, the first node is in uplink synchronization with the first cell.

As one embodiment, the first signal comprises a baseband signal.

As one embodiment, the first signal comprises a radio frequency signal.

As one embodiment, the first signal comprises a wireless signal.

As one embodiment, the first signal corresponds to one uplink grant.

As one embodiment, the first signal corresponds to transmission of one configured grant.

As one embodiment, the first signal corresponds to transmission of one Type 1 configured grant.

As one embodiment, the first signal corresponds to one uplink grant corresponding to one Type 1 configured grant.

As one embodiment, the first signal is transmitted on the first cell.

As one embodiment, the first time-frequency resource occupied by the first signal belongs to an air interface resource of the first cell.

As one embodiment, the air interface resource in the present application comprises a time domain resource.

As one embodiment, the air interface resource in the present application comprises a frequency domain resource.

As one embodiment, the air interface resource in the present application comprises a code domain resource.

As one embodiment, the air interface resource in the present application comprises a space domain resource.

As one embodiment, the first node U3 sends the first signal on the first cell.

As one embodiment, the second node N4 receives the first signal on the first cell.

As one embodiment, the first node sends the first signal in the first time-frequency resource set in accordance with a timing advance (TA) for the first cell.

As one embodiment, the physical layer channel corresponding to the first signal comprises a physical uplink shared channel (PUSCH).

As one embodiment, a transmission channel corresponding to the first signal comprises an uplink-shared channel (UL-SCH).

### Embodiment 7

Embodiment 7 illustrates a schematic diagram of a first node according to one embodiment of the present application, as shown in FIG. 7. In FIG. 7, the first node performs handover to obtain a first serving cell in step 701.

As one embodiment, performing handover to obtain refers to: switch out.

As one embodiment, performing handover to obtain refers to: hand out.

As one embodiment, performing handover to obtain refers to: turn out.

As one embodiment, performing handover to obtain refers to: camp out.

As one embodiment, performing handover to obtain is dynamic.

As one embodiment, the first serving cell is the first cell.

As one embodiment, the first serving cell is a cell other than the first cell.

As one embodiment, the meaning of performing handover to obtain a first serving cell comprises: performing handover from the first serving cell to a second serving cell, the second serving cell being different from the first serving cell.

As one embodiment, the meaning of step 701 "performing handover to obtain a first serving cell" comprises: the first serving cell is no longer a serving cell of the first node.

As one embodiment, the meaning of step 701 "performing handover to obtain a first serving cell" comprises: the first serving cell becomes a candidate cell for the first node.

As one embodiment, the meaning of step 701 "performing handover to obtain a first serving cell" comprises: the first serving cell is obtained through handover.

As one embodiment, the meaning of step 701 "performing handover to obtain a first serving cell" comprises: the first serving cell is obtained through handover by mobility of L1/L2.

As one embodiment, step 701 of "performing handover to obtain a first serving cell" is after step S510 of Embodiment 5 of the present application of receiving first signaling, and before step S512 of receiving the second signaling.

As one sub-embodiment of this embodiment, the first serving cell is the first cell, the serving cell of the first node changes from the first cell to the second serving cell of the present application, and the second serving cell is a cell other than the first serving cell.

As one embodiment, step 701 of "performing handover to obtain a first serving cell" is after step S512 of Embodiment 5 of the present application of receiving the second signaling.

As one sub-embodiment of this embodiment, step S513 of Embodiment 5 of the present application of performing handover to the first cell comprises step 701 of performing handover to obtain a first serving cell.

As one dependent embodiment of this sub-embodiment, the serving cell of the first node changes from the first serving cell to the first cell, and the first serving cell is a cell other than the first cell.

As one embodiment, the second signaling originates from the second serving cell of the present application.

As one embodiment, the second signaling originates from the first cell.

As one embodiment, the first node determines performing handover to obtain the first serving cell for a measurement on the first serving cell.

As one sub-embodiment of this embodiment, the measurement on the first serving cell comprises a Layer 1 reference signal received power (L1-RSRP) measurement.

As one sub-embodiment of this embodiment, the measurement on the first serving cell comprises a Layer 3 reference signal received power (L3-RSRP) measurement.

As one sub-embodiment of this embodiment, the measurement on the first serving cell comprises a Layer 1 signal to noise and interference ratio (L1-SINR) measurement.

As one sub-embodiment of this embodiment, the measurement on the first serving cell comprises a Layer 3 signal to noise and interference ratio (L3-SINR) measurement.

As one sub-embodiment of this embodiment, the measurement on the first serving cell comprises a reference signal received quality (RSRQ) measurement.

As one sub-embodiment of this embodiment, the measurement on the first serving cell comprises a received signal strength indicator (RSSI) measurement.

As one sub-embodiment of this embodiment, the measurement on the first serving cell is used for evaluating a cell selection.

As one sub-embodiment of this embodiment, the measurement on the first serving cell is used for evaluating cell handover.

As one sub-embodiment of this embodiment, the measurement on the first serving cell is used for mobility management.

As one sub-embodiment of this embodiment, the measurement on the first serving cell is used for determining performing handover to obtain the first serving cell.

### Embodiment 8

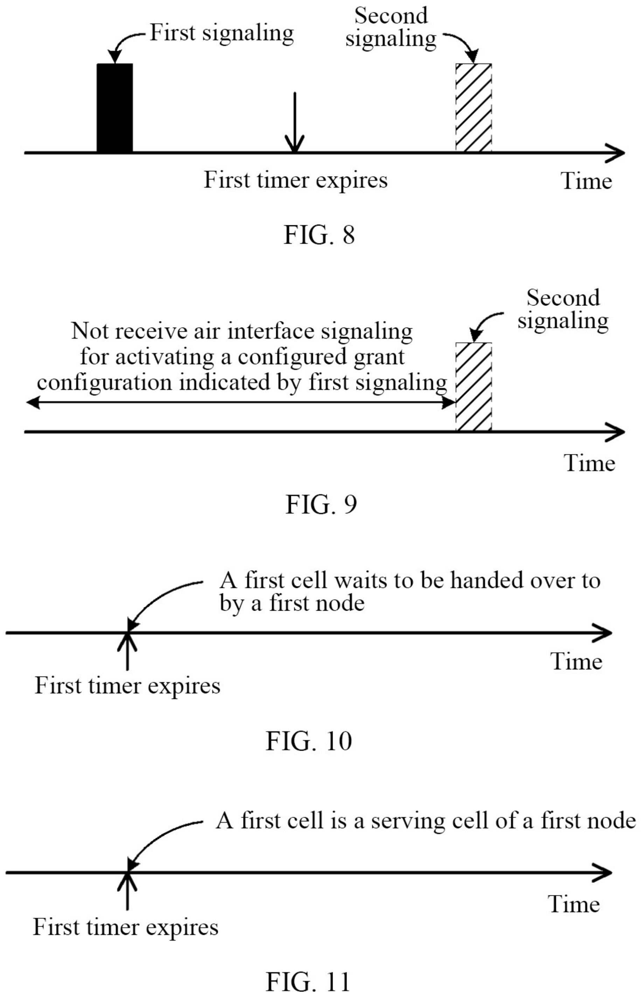

Embodiment 8 illustrates a schematic diagram of an expiration moment of a first timer according to one embodiment of the present application, as shown in FIG. 8. In FIG. 8, a gray-filled block represents a time domain resource occupied by first signaling, and a diagonally filled block represents a time domain resource occupied by second signaling. The expiration of the first timer occurs after the first signaling and before the second signaling. It should be noted that the lengths of the time domain resources occupied by the first signaling and the second signaling in FIG. 8 of this embodiment do not limit the lengths of the time domain resources occupied by the first signaling and the second signaling in the present application.

As one embodiment, the expiration of the first timer occurs after the first signaling and before the second signaling.

As one embodiment, the meaning of the characteristic "after the first signaling" comprises: after receiving the first signaling.

As one embodiment, the meaning of the characteristic "after the first signaling" comprises: after successfully decoding the first signaling.

As one embodiment, the meaning of the characteristic "before the second signaling" comprises: before receiving the second signaling.

As one embodiment, the meaning of the characteristic "before the second signaling" comprises: before successfully decoding the second signaling.

### Embodiment 9

Embodiment 9 illustrates a schematic diagram of a moment before receiving second signaling according to one embodiment of the present application, as shown in FIG. 9. In FIG. 9, a diagonally filled block represents a time domain resource occupied by the second signaling. Before the second signaling, in the present application, the first node does not receive air interface signaling for activating a configured grant configuration indicated by the first signaling, and the air interface signaling is RRC signaling or DCI.

As one embodiment, before the second signaling, in the present application, the first node does not receive air interface signaling for activating a configured grant configuration indicated by the first signaling, and the air interface signaling is RRC signaling or DCI.

As one embodiment, the characteristic before the second signaling comprises: before receiving the second signaling.

As one embodiment, the characteristic before the second signaling comprises: before successfully decoding the second signaling.

As one embodiment, the air interface signaling is RRC signaling.

As one embodiment, the "air interface signaling for activating a configured grant configuration indicated by the first signaling" comprises information in part or all of the fields of one RRC IE.

As one embodiment, the "air interface signaling for activating a configured grant configuration indicated by the first signaling" comprises part or all of fields in an *RRCreconfiguration* IE.

As one embodiment, the "air interface signaling for activating a configured grant configuration indicated by the first signaling" comprises part or all of fields in an *RRCReestablishment* IE.

As one embodiment, the "air interface signaling for activating a configured grant configuration indicated by the first signaling" comprises part or all of fields in an *RRCResume* IE.

As one embodiment, the "air interface signaling for activating a configured grant configuration indicated by the first signaling" comprises part or all of fields in an *RRCSetup* IE.

As one embodiment, the "air interface signaling for activating a configured grant configuration indicated by the first signaling" comprises part or all of fields in an *ConfiguredGrantConfig* IE.

As one embodiment, the air interface signaling is DCI.

As one sub-embodiment of this embodiment, a format of the DCI is DCI format 0_0.

As one sub-embodiment of this embodiment, a format of the DCI is DCI format 0_1.

As one sub-embodiment of this embodiment, a format of the DCI is DCI format 0_2.

As one sub-embodiment of this embodiment, a cyclic redundancy check (CRC) of the DCI is scrambled by a configured scheduling (CS) - radio network temporary identifier (RNTI).

As one sub-embodiment of this embodiment, the new data indicator (NDI) of the DCI is equal to 0.

As one sub-embodiment of this embodiment, the "Time domain resource allocation" field of the DCI is used for indicating a start and length indicator value (SLIV).

As one sub-embodiment of this embodiment, the "HARQ process number" field of the DCI is used for indicating the index of the configured grant configuration.

As one sub-embodiment of this embodiment, the "HARQ process number" field of the DCI is used for indicating *ConfiguredGrantConfiglndex* of the configured grant configuration.

As one dependent embodiment of this sub-embodiment, the configured grant configuration comprises one uplink grant.

As one sub-embodiment of this embodiment, the "HARQ process number" field of the DCI is all zeros.

As one sub-embodiment of this embodiment, the redundancy version (RV) field of the DCI is all zeros.

As one sub-embodiment of this embodiment, the "DCI format indicator flag (DFI flag)" field of the DCI is present, and the "DFI flag" field of the DCI is 0.

As one sub-embodiment of this embodiment, the "DFI flag" field is not present in the DCI.

### Embodiment 10

Embodiment 10 illustrates a first schematic diagram of a relationship between a first cell and a first node when a first timer expires according to one embodiment of the present application, as shown in FIG. 10. In FIG. 10, when a behavior of the expiration of the first timer occurs, the first cell waits to be handed over to by the first node.

As one embodiment, the meaning of the characteristic that "when a behavior of the expiration of the first timer occurs, the first cell waits to be handed over to by the first node" comprises: the first cell is a candidate cell of the first node. However, when the behavior of the expiration of the first timer occurs, the first cell does not provide a service to the first node.

As one embodiment, the meaning of the characteristic that "when a behavior of the expiration of the first timer occurs, the first cell waits to be handed over to by the first node" comprises: the first cell is a serving cell of the first node. However, when the behavior of the expiration of the first timer occurs, the first cell is in a deactivated state.

As one embodiment, the meaning of the characteristic that "when a behavior of the expiration of the first timer occurs, the first cell waits to be handed over to by the first node" comprises: the first cell is not a serving cell of the first node, and the first cell is a candidate cell of the first node.

As one embodiment, the meaning of the characteristic that "when a behavior of the expiration of the first timer occurs, the first cell waits to be handed over to by the first node" comprises: the first cell is not a serving cell of the first node, and the first cell is a neighboring cell of the first node.

As one embodiment, the meaning of the characteristic that "when a behavior of the expiration of the first timer occurs, the first cell waits to be handed over to by the first node" comprises: the first cell is not a serving cell of the first node, and the first cell supports L1/L2-centric cell level mobility of the first node.

As one embodiment, the meaning of the characteristic that "when a behavior of the expiration of the first timer occurs, the first cell waits to be handed over to by the first node" comprises: the first cell is not a serving cell of the first node, and the first cell is a cell that can be used by the first node for inter-cell mobility of L1/L2.

As one embodiment, the meaning of the characteristic that "when a behavior of the expiration of the first timer occurs, the first cell waits to be handed over to by the first node" comprises: the first cell is not a serving cell of the first node, and the first cell waits to be dynamically indicated as a serving cell of the first node.

As one embodiment, the meaning of the characteristic that "when a behavior of the expiration of the first timer occurs, the first cell waits to be handed over to by the first node" comprises: the first cell is not a serving cell of the first node, and the first node can be handed over to the first cell through mobility of L1/L2.

As one embodiment, the first timer is associated with the first cell.

As one embodiment, the first timer is associated with the TAG where the first cell is located.

### Embodiment 11

Embodiment 11 illustrates a second schematic diagram of a relationship between a first cell and a first node when a first timer expires according to one embodiment of the present application, as shown in FIG. 11. In FIG. 11, when a behavior of the expiration of the first timer occurs, the first cell is a serving cell of the first node.

As one embodiment, when the expiration of the first timer occurs, the first cell is a serving cell of the first node.

As one embodiment, the first cell corresponds to one *ServCelllndex.*

As one embodiment, the first cell corresponds to one *ServCellId.*

As one embodiment, the first cell corresponds to one *ServCellIdentity.*

As one embodiment, the *ServCellIndex* is a non-negative integer not greater than 31.

As one embodiment, the *SCellIndex* is a positive integer not greater than 31.

As one embodiment, the serving cell is a primary cell (PCell).

As one embodiment, the serving cell is a secondary cell (SCell).

As one embodiment, the serving cell is a special cell (SpCell).

As one embodiment, the serving cell is a master cell group (MCG) cell.

As one embodiment, the serving cell is a secondary cell group (SCG) cell.

As one embodiment, when one cell is configured to the first node through an *sCellToAddModList* IE, the one cell is a serving cell of the first node; and when one cell is an SpCell of the first node, the one cell is the serving cell of the first node.

As one embodiment, when one cell is neither configured to the first node through the *sCellToAddModList* IE nor is the SpCell of the first node, the one cell is not the serving cell of the first node.

As one embodiment, when one cell is neither configured to the first node through the *sCellToAddModList* IE nor is the SpCell of the first node, the one cell is a cell other than the serving cell of the first node.

### Embodiment 12

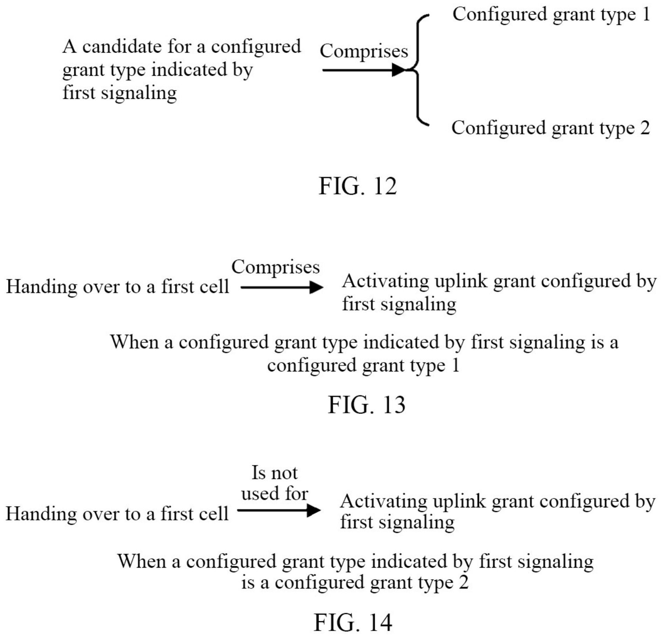

Embodiment 12 illustrates a schematic diagram of a configured grant type according to one embodiment of the present application, as shown in FIG. 12. In FIG. 12, a candidate for a configured grant type indicated by the first signaling comprises a configured grant type 1 and a configured grant type 2.

As one embodiment, a candidate for a configured grant type indicated by the first signaling comprises a configured grant type 1 and a configured grant type 2.

As one embodiment, the first signaling implicitly indicates the configured grant type.

As one embodiment, the first signaling comprises part or all of fields of a *ConfiguredGrantConfig* IE, wherein whether the *ConfiguredGrantConfig* IE comprises *rrc - ConfiguredUplinkGrant* is used for indicating the configured grant type.

As one sub-embodiment of this embodiment, the *ConfiguredGrantConfig* IE comprises an *rrc - ConfiguredUplinkGrant* field, and the configured grant type indicated by the first signaling is a configured grant type 1.

As one sub-embodiment of this embodiment, the *ConfiguredGrantConfig* IE does not comprise the *rrc - ConfiguredUplinkGrant* field, and the configured grant type indicated by the first signaling is a configured grant type 2.

As one embodiment, the configured grant type 1 corresponds to an *rrc - ConfiguredUplinkGrant* portion of the RRC IE corresponding to the first signaling.

As one embodiment, the configured grant type 2 corresponds to a portion other than the *rrc - ConfiguredUplinkGrant* portion of the RRC IE corresponding to the first signaling.

As one embodiment, the configured grant type indicated by the first signaling is applied to the uplink grant configured by the first signaling.

As one embodiment, the first signaling is used for configuring the uplink grant for the first cell, and the uplink grant comprises one configured grant configuration.

As one sub-embodiment of this embodiment, the configured grant type of the one configured grant configuration is the configured grant type 1.

As one sub-embodiment of this embodiment, the configured grant type of the one configured grant configuration is the configured grant type 2.

As one embodiment, the first signaling is used for configuring the uplink grant for a first cell, and the uplink grant comprises a plurality of configured grant configurations.

As one sub-embodiment of this embodiment, the configured grant type of the plurality of configured grant configurations is the configured grant type 1.

As one sub-embodiment of this embodiment, the configured grant type of the plurality of configured grant configurations is the configured grant type 2.

As one sub-embodiment of this embodiment, the configured grant types of the plurality of configured grant configurations comprise both the configured grant type 1 and the configured grant type 2.

As one embodiment, the configured grant type 1 does not need activation through dynamic signaling, while the configured grant type 2 needs activation through dynamic signaling.

As one sub-embodiment of this embodiment, the dynamic signaling is DCI.

As one dependent embodiment of this sub-embodiment, a format of the DCI is DCI format 0_0.

As one dependent embodiment of this sub-embodiment, a format of the DCI is DCI format 0_1.

As one dependent embodiment of this sub-embodiment, a format of the DCI is DCI format 0_2.

As one dependent embodiment of this sub-embodiment, CRC of the DCI is scrambled by the CS-RNTI.

As one dependent embodiment of this sub-embodiment, the NDI of the DCI is equal to 0.

As one dependent embodiment of this sub-embodiment, the "Time domain resource allocation" field of the DCI is used for indicating one SLIV.

As one dependent embodiment of this sub-embodiment, the "HARQ process number" field of the DCI is used for indicating the index of the configured grant configuration.

As one dependent embodiment of this sub-embodiment, the "HARQ process number" field of the DCI of the configured grant type is used for indicating *ConfiguredGrantConfigIndex* of the configured grant configuration.

As one dependent example of this dependent embodiment, the configured grant configuration comprises a plurality of uplink grants.

As one dependent embodiment of this sub-embodiment, "HARQ process number" fields of the DCI are all zeros.

As one dependent embodiment of this sub-embodiment, RV fields of the DCI are all zeros.

As one sub-embodiment of this embodiment, a "DFI flag" field exists in the DCI, and the "DFI flag" field of the DCI is 0.

As one dependent embodiment of this sub-embodiment, a "DFI flag" field does not exist in the DCI.

### Embodiment 13

FIG. 13 illustrates a schematic diagram of a configured grant type indicated by first signaling being a configured grant type 1 according to one embodiment of the present application, as shown in FIG. 13. In FIG. 13, when the configured grant type indicated by the first signaling is the configured grant type 1, the behavior of "handing over to the first cell" comprises activating the uplink grant configured by the first signaling.

As one embodiment, when the configured grant type indicated by the first signaling is the configured grant type 1, the behavior of "handing over to the first cell" comprises: activating the uplink grant configured by the first signaling.

As one embodiment, when the configured grant type indicated by the first signaling is the configured grant type 1, the behavior of "handing over to the first cell" comprises: activating the uplink grant whose configured grant type indicated by the first signaling is the configured grant type 1.

As one embodiment, the behavior of "handing over to the first cell" comprises: activating the uplink grant whose configured grant type indicated by the first signaling is the configured grant type 1.

As one embodiment, the behavior of "handing over to the first cell" comprises: activating only the uplink grant configuration whose configured grant type indicated by the first signaling is the configured grant type 1.

### Embodiment 14

FIG. 14 illustrates a schematic diagram of a configured grant type indicated by first signaling being a configured grant type 2 according to one embodiment of the present application, as shown in FIG. 14. In FIG. 14, when the configured grant type indicated by the first signaling is the configured grant type 2, the behavior of "handing over to the first cell" is not used for activating the uplink grant configured by the first signaling.

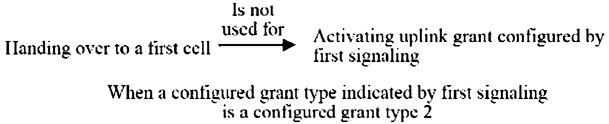

As one embodiment, when the configured grant type indicated by the first signaling is the configured grant type 2, the behavior of "handing over to the first cell" is not used for activating the uplink grant configured by the first signaling.

As one embodiment, when the configured grant type indicated by the first signaling is the configured grant type 2, the behavior of "handing over to the first cell" is not used for activating the uplink grant whose configured grant type indicated by the first signaling is the configured grant type 2.

As one embodiment, the behavior of "handing over to the first cell" is not used for activating the uplink grant whose configured grant type indicated by the first signaling is the configured grant type 2.

As one embodiment, the uplink grant for the first cell configured by the first signaling comprises a plurality of configured grant configurations, the configured grant types of the plurality of configured grant configurations comprise the configured grant type 1 and the configured grant type 2, and the behavior of "handing over to the first cell" comprises: activating the uplink grant in the plurality of configured grant configurations whose configured grant type is the configured grant type 1, and not activating the uplink grant in the plurality of configured grant configurations whose configured grant type is the configured grant type 2.

As one embodiment, when the configured grant type indicated by the first signaling is the configured grant type 2, the first node needs to receive air interface signaling for activating the configured grant type 2 indicated by the first signaling after the behavior of "handing over to the first cell".

As one sub-embodiment of this embodiment, the air interface signaling is DCI.

As one dependent embodiment of this sub-embodiment, a format of the DCI is DCI format 0_0.

As one dependent embodiment of this sub-embodiment, a format of the DCI is DCI format 0_1.

As one dependent embodiment of this sub-embodiment, a format of the DCI is DCI format 0_2.

As one dependent embodiment of this sub-embodiment, CRC of the DCI is scrambled by the CS-RNTI.

As one dependent embodiment of this sub-embodiment, the NDI of the DCI is equal to 0.

As one dependent embodiment of this sub-embodiment, the "Time domain resource allocation" field of the DCI is used for indicating one SLIV.

As one dependent embodiment of this sub-embodiment, the "HARQ process number" field of the DCI is used for indicating the index of the configured grant configuration.

As one dependent embodiment of this sub-embodiment, the "HARQ process number" field of the DCI of the configured grant type is used for indicating *ConfiguredGrantConfiglndex* of the configured grant configuration.

As one dependent example of this dependent embodiment, the configured grant configuration comprises a plurality of uplink grants.

As one dependent embodiment of this sub-embodiment, "HARQ process number" fields of the DCI are all zeros.

As one dependent embodiment of this sub-embodiment, RV fields of the DCI are all zeros.

As one dependent embodiment of this sub-embodiment, a "DFI flag" field exists in the DCI, and the "DFI flag" field of the DCI is 0.

As one dependent embodiment of this sub-embodiment, a "DFI flag" field does not exist in the DCI.

### Embodiment 15

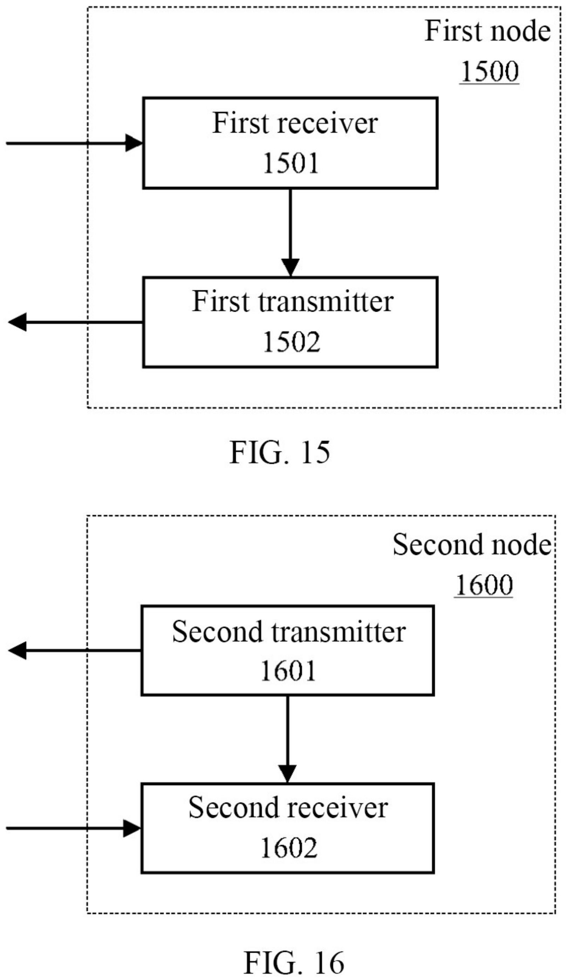

Embodiment 15 illustrates a structural block diagram of a processing apparatus for a first node according to one embodiment of the present application, as shown in FIG. 15. In FIG. 15, a processing apparatus 1500 in the first node comprises a first receiver 1501 and a first transmitter 1502.

In Embodiment 15, the first receiver 1501 receives first signaling, the first signaling being RRC signaling, and the first signaling being used for configuring uplink grant for a first cell; in response to an expiration of a first timer, clearing the uplink grant at least for the first cell; and receiving second signaling, the second signaling being MAC layer signaling or physical layer signaling; and in response to receiving the second signaling, the first transmitter 1502 hands over to the first cell; and

In Embodiment 15, a behavior of handing over to the first cell comprises activating the uplink grant configured by the first signaling.

As one embodiment, a candidate for a configured grant type indicated by the first signaling comprises a configured grant type 1 and a configured grant type 2; only when the configured grant type indicated by the first signaling is the configured grant type 1, the behavior of handing over to the first cell comprises activating the uplink grant configured by the first signaling.

As one embodiment, the expiration of the first timer occurs after the first signaling and before the second signaling.

As one embodiment, before the second signaling, the first node does not receive air interface signaling for activating a configured grant configuration indicated by the first signaling, and the air interface signaling is RRC signaling or DCI.

As one embodiment, when the behavior of the expiration of the first timer occurs, the first cell waits to be handed over to by the first node.

As one embodiment, when the behavior of the expiration of the first timer occurs, the first cell is a serving cell of the first node.

As one embodiment, the first receiver 1501 performs handover to obtain a first serving cell.

As one embodiment, the first transmitter 1502 sends a first signal in a first time-frequency resource set, and the uplink grant configured for the first signaling is used for determining the first time-frequency resource set.

As one embodiment, the second signaling comprises a timing advance command.

As one sub-embodiment of this embodiment, the timing advance command is used for determining a timing advance (TA) value for the first node during uplink sending to the first cell.

As one embodiment, the uplink grant for the first cell configured by the first signaling comprises a plurality of configured grant configurations, the configured grant types of the plurality of configured grant configurations comprise the configured grant type 1 and the configured grant type 2, and the behavior of "handing over to the first cell" comprises: activating the uplink grant in the plurality of configured grant configurations whose configured grant type is the configured grant type 1, and not activating the uplink grant in the plurality of configured grant configurations whose configured grant type is the configured grant type 2.

As one embodiment, when the uplink grant configured by the first signaling is not activated, the uplink grant configured by the first signaling cannot be executed.

As one embodiment, the first node does not need to receive an RRC-based reconfiguration for the configured grant configuration associated with the first time-frequency resource set before sending the first signal in the first time-frequency resource set.

As one embodiment, a behavior of "activating the uplink grant configured by the first signaling" refers to that when data is to be sent, the data is sent using the uplink grant configured by the first signaling.

As one embodiment, the first node is a user equipment.

As one embodiment, the first node is a relay node device.

As one embodiment, the first receiver 1501 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1502 comprises at least one of {an antenna 452, a transmitting device 454, a transmitting processor 468, a multi-antenna transmitting processor 457, a controller/processor 459, a memory 460, or a data source 467} in Embodiment 4.

### Embodiment 16

Embodiment 16 illustrates a structural block diagram of a processing apparatus for a second node according to one embodiment of the present application, as shown in FIG. 16. In FIG. 16, a processing apparatus 1600 in the second node comprises a second transmitter 1601 and a second receiver 1602.

In Embodiment 16, the second transmitter 1601 sends first signaling, the first signaling being RRC signaling, and the first signaling being used for configuring uplink grant for a first cell; and sends second signaling, the second signaling being MAC layer signaling or physical layer signaling.

In Embodiment 16, a recipient of the first signaling and the second signaling comprises a first node; in response to an expiration of a first timer, the first node clears the uplink grant at least for the first cell; in response to receiving the second signaling, the first node hands over to the first cell; and a behavior of handing over to the first cell comprises activating the uplink grant configured by the first signaling.

As one embodiment, a candidate for a configured grant type indicated by the first signaling comprises a configured grant type 1 and a configured grant type 2; only when the configured grant type indicated by the first signaling is the configured grant type 1, the behavior of handing over to the first cell comprises activating the uplink grant configured by the first signaling.

As one embodiment, the expiration of the first timer occurs after the first signaling and before the second signaling.

As one embodiment, before the second signaling, the first node does not receive air interface signaling for activating a configured grant configuration indicated by the first signaling, and the air interface signaling is RRC signaling or DCI.

As one embodiment, when the behavior of the expiration of the first timer occurs, the first cell waits to be handed over to by the first node.

As one embodiment, when the behavior of the expiration of the first timer occurs, the first cell is a serving cell of the first node.

As one embodiment, the first node performs handover to obtain a first serving cell.

As one embodiment, the second receiver 1602 receives a first signal in a first time-frequency resource set; the uplink grant configured for the first signaling is used for determining the first time-frequency resource set.

As one embodiment, the second signaling comprises a timing advance command.

As one sub-embodiment of this embodiment, the timing advance command is used for determining a timing advance (TA) value for the first node during uplink sending to the first cell.

As one embodiment, the uplink grant for the first cell configured by the first signaling comprises a plurality of configured grant configurations, the configured grant types of the plurality of configured grant configurations comprise the configured grant type 1 and the configured grant type 2, and the behavior of "handing over to the first cell" comprises: activating the uplink grant in the plurality of configured grant configurations whose configured grant type is the configured grant type 1, and not activating the uplink grant in the plurality of configured grant configurations whose configured grant type is the configured grant type 2.

As one embodiment, when the uplink grant configured by the first signaling is not activated, the uplink grant configured by the first signaling cannot be executed.

As one embodiment, the first node does not need to receive an RRC-based reconfiguration for the configured grant configuration associated with the first time-frequency resource set before sending the first signal in the first time-frequency resource set.

As one embodiment, a behavior of "activating the uplink grant configured by the first signaling" refers to that when data is to be sent, the data is sent using the uplink grant configured by the first signaling.

As one embodiment, the second node is a base station device.

As one embodiment, the second node is user equipment.

As one embodiment, the second node is a relay node device.

As one embodiment, the second transmitter 1601 comprises at least one of {an antenna 420, a transmitting device 418, a transmitting processor 416, a multi-antenna transmitting processor 471, a controller/processor 475, or a memory 476} in Embodiment 4.

As one embodiment, the second receiver 1602 comprises at least one of {an antenna 420, a receiving device 418, a receiving processor 470, a multi-antenna receiving processor 472, a controller/processor 475, a memory 476} in Embodiment 4.

Those skilled in the art will appreciate that all or some of the steps in the above-mentioned method may be implemented by instructing relevant hardware by a program, where the program can be stored in a computer-readable storage medium, such as a read-only memory, a hard disk or an optical disk, etc. Optionally, all or some of the steps of the above-mentioned embodiments may also be implemented using one or more integrated circuits. Correspondingly, each module unit in the above-mentioned embodiment can be implemented either in a hardware form or as software functional modules. The present application is not limited to any specific combination form of hardware and software. The user equipment, terminals and UE in the present application comprise but are not limited to: drones, communication modules on drones, remote-controlled aircraft, aircraft, small aircraft, mobile phones, tablet computers, notebooks, in-vehicle communication devices, transportation tools, vehicles, RSUs, wireless sensors, internet cards, Internet of Things terminals, RFID (Radio Frequency Identification) terminals, NB-IoT (Narrow Band Internet of Things) terminals, MTC (Machine Type Communication) terminals, eMTC (enhanced MTC) terminals, data cards, internet cards, in-vehicle communication devices, low-cost mobile phones, low-cost tablet computers, and other wireless communication devices. The base station or system equipment in the present application includes but is not limited to: macro base stations, micro base stations, small base stations, home base stations, relay base stations, eNB (evolved Node B), gNB, TRP, GNSS (Global Navigation Satellite System), relay satellites, satellite base stations, airborne base stations, RSU, drones, testing devices, such as transceiver apparatuses or signaling test instruments that simulate partial base station functions, and other wireless communication devices.

Those skilled in the art will appreciate that the present invention may be practiced in other designated forms without departing from its core or basic features. Therefore, the currently disclosed embodiments should be regarded as descriptive and not restrictive in any way. The scope of the invention is determined by the appended claims rather than the foregoing description, and all modifications within their equivalent meaning and area are considered to have been included therein.

## Claims

1. A first node for wireless communication, comprising:
a first receiver receiving first signaling, the first signaling being RRC signaling, and the first signaling being used for configuring uplink grant for a first cell; in response to an expiration of a first timer, clearing the uplink grant at least for the first cell; and receiving second signaling, the second signaling being MAC layer signaling or physical layer signaling; and
a first transmitter, in response to receiving the second signaling, handing over to the first cell,
wherein a behavior of handing over to the first cell comprises activating the uplink grant configured by the first signaling.

2. The first node according to claim 1, wherein a candidate for a configured grant type indicated by the first signaling comprises a configured grant type 1 and a configured grant type 2; and only when the configured grant type indicated by the first signaling is the configured grant type 1, the behavior of handing over to the first cell comprises activating the uplink grant configured by the first signaling.

3. The first node according to claim 1 or 2, wherein the expiration of the first timer occurs after the first signaling and before the second signaling.

4. The first node according to any one of claims 1 to 3, wherein before the second signaling, the first node does not receive air interface signaling for activating a configured grant configuration indicated by the first signaling, and the air interface signaling is RRC signaling or DCI.

5. The first node according to any one of claims 1 to 4, wherein when a behavior of the expiration of the first timer occurs, the first cell waits to be handed over to by the first node.

6. The first node according to any one of claims 1 to 4, wherein when a behavior of the expiration of the first timer occurs, the first cell is a serving cell of the first node.

7. The first node according to any one of claims 1 to 6, comprising:
the first receiver handing over to obtain a first serving cell.

8. The first node according to any one of claims 1 to 7, comprising:
the first transmitter sending a first signal in a first time-frequency resource set,
wherein the uplink grant configured for the first signaling is used for determining the first time-frequency resource set.

9. A second node for wireless communication, comprising:
a second transmitter sending first signaling, the first signaling being RRC signaling, and the first signaling being used for configuring uplink grant for a first cell; and sending second signaling, the second signaling being MAC layer signaling or physical layer signaling,
wherein a recipient of the first signaling and the second signaling comprises a first node; in response to an expiration of a first timer, the first node clears the uplink grant at least for the first cell; in response to receiving the second signaling, the first node hands over to the first cell; and a behavior of handing over to the first cell comprises activating the uplink grant configured by the first signaling.

10. The second node according to claim 9, wherein a candidate for a configured grant type indicated by the first signaling comprises a configured grant type 1 and a configured grant type 2; and only when the configured grant type indicated by the first signaling is the configured grant type 1, the behavior of handing over to the first cell comprises activating the uplink grant configured by the first signaling.

11. The second node according to claim 9 or 10, wherein the expiration of the first timer occurs after the first signaling and before the second signaling.

12. The second node according to any one of claims 9 to 11, wherein before the second signaling, the first node does not receive air interface signaling for activating a configured grant configuration indicated by the first signaling, and the air interface signaling is RRC signaling or DCI.

13. The second node according to any one of claims 9 to 12, wherein when a behavior of the expiration of the first timer occurs, the first cell waits to be handed over to by the first node.

14. The second node according to any one of claims 9 to 13, wherein when the behavior of the expiration of the first timer occurs, the first cell is a serving cell of the first node.

15. The second node according to any one of claims 9 to 14, wherein the first node hands over to obtain a first serving cell.

16. The second node according to any one of claims 9 to 15, comprising: a second receiver receiving a first signal in a first time-frequency resource set, wherein the uplink grant configured for the first signaling is used for determining the first time-frequency resource set.

17. A method in a first node for wireless communication, comprising:
receiving first signaling, the first signaling being RRC signaling, and the first signaling being used for configuring uplink grant for a first cell; in response to an expiration of a first timer, clearing the uplink grant at least for the first cell; and receiving second signaling, the second signaling being MAC layer signaling or physical layer signaling; and
in response to receiving the second signaling, handing over to the first cell,
wherein a behavior of handing over to the first cell comprises activating the uplink grant configured by the first signaling.

18. The method according to claim 17, wherein a candidate for a configured grant type indicated by the first signaling comprises a configured grant type 1 and a configured grant type 2; and only when the configured grant type indicated by the first signaling is the configured grant type 1, the behavior of handing over to the first cell comprises activating the uplink grant configured by the first signaling.

19. The method according to claim 17 or 18, wherein the expiration of the first timer occurs after the first signaling and before the second signaling.

20. The method according to any one of claims 17 to 19, wherein before the second signaling, the first node does not receive air interface signaling for activating a configured grant configuration indicated by the first signaling, and the air interface signaling is RRC signaling or DCI.

21. The method according to any one of claims 17 to 20, wherein when a behavior of the expiration of the first timer occurs, the first cell waits to be handed over to by the first node.

22. The method according to any one of claims 17 to 21, wherein when the behavior of the expiration of the first timer occurs, the first cell is a serving cell of the first node.

23. The method according to any one of claims 17 to 22, comprising: handing over to obtain a first serving cell.

24. The method according to any one of claims 17 to 23, comprising: sending a first signal in a first time-frequency resource set, wherein the uplink grant configured for the first signaling is used for determining the first time-frequency resource set.

25. A method in a second node for wireless communication, comprising:
sending first signaling, the first signaling being RRC signaling, and the first signaling being used for configuring uplink grant for a first cell; and
sending second signaling, the second signaling being MAC layer signaling or physical layer signaling,
wherein a recipient of the first signaling and the second signaling comprises a first node; in response to an expiration of a first timer, the first node clears the uplink grant at least for the first cell; in response to receiving the second signaling, the first node hands over to the first cell; and a behavior of handing over to the first cell comprises activating the uplink grant configured by the first signaling.

26. The method according to claim 25, wherein a candidate for a configured grant type indicated by the first signaling comprises a configured grant type 1 and a configured grant type 2; and only when the configured grant type indicated by the first signaling is the configured grant type 1, the behavior of handing over to the first cell comprises activating the uplink grant configured by the first signaling.

27. The method according to claim 25 or 26, wherein the expiration of the first timer occurs after the first signaling and before the second signaling.

28. The method according to any one of claims 25 to 27, wherein before the second signaling, the first node does not receive air interface signaling for activating a configured grant configuration indicated by the first signaling, and the air interface signaling is RRC signaling or DCI.

29. The method according to any one of claims 25 to 28, wherein when a behavior of the expiration of the first timer occurs, the first cell waits to be handed over to by the first node.

30. The method according to any one of claims 25 to 29, wherein when the behavior of the expiration of the first timer occurs, the first cell is a serving cell of the first node.

31. The method according to any one of claims 25 to 30, comprising: the first node handing over to obtain a first serving cell.

32. The method according to any one of claims 25 to 31, comprising: receiving a first signal in a first time-frequency resource set, wherein the uplink grant configured for the first signaling is used for determining the first time-frequency resource set.
